(19) Europäisches Patentamt
European Patent Office
Office européen des brevets

(11) **EP 4 221 385 A1**

(12) **EUROPEAN PATENT APPLICATION**
published in accordance with Art. 153(4) EPC

(43) Date of publication:
**02.08.2023 Bulletin 2023/31**

(51) International Patent Classification (IPC):
*H04W 72/02* (2009.01)

(21) Application number: **20957301.3**

(52) Cooperative Patent Classification (CPC):
**H04W 72/02**

(22) Date of filing: **16.10.2020**

(86) International application number:
**PCT/CN2020/121708**

(87) International publication number:
**WO 2022/077523 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(72) Inventors:
• HUANG, Haining
  Shenzhen, Guangdong 518129 (CN)
• LI, Chao
  Shenzhen, Guangdong 518129 (CN)
• ZHANG, Tianhong
  Shenzhen, Guangdong 518129 (CN)

(74) Representative: **Gill Jennings & Every LLP**
**The Broadgate Tower**
**20 Primrose Street**
**London EC2A 2ES (GB)**

(71) Applicant: **Huawei Technologies Co., Ltd.**
**Shenzhen, Guangdong 518129 (CN)**

(54) **METHOD AND APPARATUS FOR DETERMINING CHANNEL CONGESTION PARAMETER**

(57)     Embodiments of this application provide a channel congestion parameter determining method and apparatus. The method includes: determining a first measurement window based on a first slot and first preset duration; and determining a channel busy ratio CBR or a channel occupancy ratio CR based on a first time period, where the first time period is a time unit in the first measurement window. In embodiments of this application, accuracy of channel congestion degree measurement can be improved.

Determine a first measurement window based on a first slot and first preset duration — S901

Determine a channel busy ratio CBR based on a first time period, where the first time period is a time unit in the first measurement window — S902

FIG. 9

EP 4 221 385 A1

## Description

## TECHNICAL FIELD

This application relates to the field of communication technologies, and in particular, to a channel congestion parameter determining method and apparatus.

## BACKGROUND

In a communication system, a many-to-one communication mode often leads to congestion near a network device, and congestion may cause global channel quality deterioration and a loss rate increase. Therefore, accurate and effective congestion detection plays an important role in channel congestion control.

In this case, a possible solution is to configure a discontinuous reception (Discontinuous Reception, DRX) function for a terminal device. Because each DRX cycle includes active time and inactive time, the terminal device monitors sidelink control information (SideLink Control Information, SCI) SCI in the active time, and does not monitor the SCI in the inactive time. As a result, the terminal device cannot measure a received signal strength indicator (Received Signal Strength Indication, RSSI) or reference signal received power (Reference Signal Receiving Power, RSRP) in the inactive time. Another solution is to configure a partial sensing resource selection mode for a terminal device. The partial sensing (partial sensing) terminal device is configured to monitor SCI and measure an RSSI only in a part of slots. In addition, due to a limitation of half-duplex, the terminal device can monitor the SCI and measure the RSSI only in a non-sending slot.

The terminal device can monitor the SCI only in a part of time in scenarios that the terminal device is configured with partial sensing resource selection, the DRX function, and the half-duplex, resulting in an inaccurate measurement result of a channel congestion degree. Therefore, how to improve accuracy of channel congestion degree measurement is a problem that needs to be resolved in this application.

## SUMMARY

This application provides a channel congestion parameter determining method and apparatus, to improve accuracy of channel congestion degree measurement.

According to a first aspect, a channel congestion parameter determining method is provided, including: determining a first measurement window based on a first slot and first preset duration; and determining a channel busy ratio CBR or a channel occupancy ratio CR based on a first time period. The first time period is a time unit in the first measurement window.

With reference to the first aspect, in a possible implementation of the first aspect, the first measurement window is a CBR measurement window or a CR evaluation window. The CBR measurement window is used for CBR measurement. The CR evaluation window is used for CR evaluation.

With reference to the first aspect, in a possible implementation of the first aspect, the first time period is a receiving time unit in the first measurement window.

With reference to the first aspect, in a possible implementation of the first aspect, the first time period includes at least one of the following: an active time period that is used for discontinuous reception DRX and that is in the first measurement window, a monitoring time unit that is used for partial sensing resource selection and that is in the first measurement window, a non-sending time unit in the first measurement window, and a time unit that is used for sidelink transmission and that is in the first measurement window.

In this solution provided in this application, the first time period includes time units in different scenarios. This helps improve an application scope of a terminal device.

With reference to the first aspect, in a possible implementation of the first aspect, the determining a CBR based on a first time period includes: determining the CBR based on a first quantity. The first quantity is a quantity of subchannels whose first measurement values are greater than or equal to a first threshold or a second threshold and that are in subchannels in the first time period. The first measurement value is an RSSI measurement value or an RSRP measurement value. The first measurement value is obtained by a terminal device while monitoring SCI transmission. SCI includes first-stage SCI and/or second-stage SCI.

With reference to the first aspect, in a possible implementation of the first aspect, the determining the CBR based on a first quantity includes: determining the CBR based on the first quantity and a second quantity. The second quantity is a quantity of subchannels in the first measurement window.

With reference to the first aspect, in a possible implementation of the first aspect, the determining the CBR based on a first quantity includes: determining the CBR based on the first quantity and a third quantity. The third quantity is a quantity of subchannels in the first time period.

In this solution provided in this application, because a subchannel on which RSSI or RSRP measurement is not performed may be occupied or may not be occupied, the terminal device cannot learn whether the subchannel on which RSSI or RSRP measurement is not performed is occupied. Therefore, the subchannel on which RSSI or RSRP measurement is not performed is excluded from CBR calculation, and only a proportion of an occupied subchannel to subchannels on which RSSI or RSRP measurement is performed is considered. This can more accurately indicate a channel congestion degree.

With reference to the first aspect, in a possible implementation of the first aspect, the determining the CBR based on a first quantity includes: determining the CBR based on the first quantity, the second quantity, and a first adjustment factor.

With reference to the first aspect, in a possible implementation of the first aspect, the first threshold is a threshold used by a terminal device in an energy-saving mode. The second threshold is a threshold used by the terminal device in a non-energy-saving mode.

In this solution provided in this application, the terminal devices in different modes correspond to different thresholds. This helps improve an application scope of the terminal device.

With reference to the first aspect, in a possible implementation of the first aspect, the first threshold is associated with partial sensing resource selection. The second threshold is associated with full sensing resource selection.

With reference to the first aspect, in a possible implementation of the first aspect, the first time period includes a monitoring time unit that is used for partial sensing resource selection and that is in the first measurement window.

With reference to the first aspect, in a possible implementation of the first aspect, both the first threshold and the second threshold are configured on a resource pool by using radio resource control RRC.

With reference to the first aspect, in a possible implementation of the first aspect, the second threshold is used when the first threshold is not configured. Alternatively, congestion control is disabled.

In this solution provided in this application, because the terminal device that uses a partial sensing resource selection manner and/or a DRX function and/or is in the energy-saving mode performs RSSI or RSRP measurement only in a part of slots and/or symbols, and does not perform RSSI or RSRP measurement in another part of slots and/or symbols, an occupation status of the subchannel on which RSSI or RSRP measurement is not performed cannot be learned of. As a result, a measured CBR is less than or equal to an actual CBR. Therefore, different thresholds are used to adjust the CBR measured by the terminal device that uses the partial sensing resource selection manner and/or the DRX function and/or that is in the energy-saving mode. This can more accurately indicate a channel congestion degree. In addition, when the first threshold associated with partial sensing resource selection and/or the DRX function is not configured, the second threshold is used, so that the measured CBR can be increased to reduce a difference between the measured CBR and the actual CBR, to improve accuracy of channel congestion degree measurement.

With reference to the first aspect, in a possible implementation of the first aspect, the first threshold is associated with a first preset period. Alternatively, the first threshold is associated with a first period set.

In this solution provided in this application, because the terminal device cannot perform RSSI or RSRP measurement in a sending time unit, the measured CBR is less than the actual CBR. Therefore, adjusting the threshold helps resolve for a problem of a small CBR measurement value.

With reference to the first aspect, in a possible implementation of the first aspect, the first adjustment factor is a ratio of a quantity of slots included in the first measurement window to a quantity of slots included in the first time period.

In this solution provided in this application, because the terminal device cannot learn whether the subchannel on which RSSI or RSRP measurement is not performed is occupied, the measured CBR is less than or equal to the actual CBR. However, it is assumed that a proportion of an occupied subchannel to subchannels on which RSSI or RSRP measurement is not performed is equal to a proportion of an occupied subchannel to subchannels on which RSSI or RSRP measurement is performed, and the CBR measured by the terminal device is proportionally adjusted. This can more accurately indicate a channel congestion degree.

With reference to the first aspect, in a possible implementation of the first aspect, the first adjustment factor is a first value. The first value is a ratio of first duration of the first measurement window to second duration of the first time period.

With reference to the first aspect, in a possible implementation of the first aspect, the first time period includes the active time period that is used for DRX and that is in the first measurement window.

In this solution provided in this application, it is assumed that a congestion status of a channel in a receiving slot is the same as a congestion status of a channel in a non-receiving slot. In this way, compared with an assumption that all channels in the non-receiving slot are not occupied, the solution is more reasonable and closer to a real channel congestion status.

With reference to the first aspect, in a possible implementation of the first aspect, the first adjustment factor is a ratio of a quantity of slots included in the first measurement window to a quantity of slots included in the first time period.

With reference to the first aspect, in a possible implementation of the first aspect, the first adjustment factor is associated with at least one of a second preset period, a first quantity of times, a second quantity of times, and a preset subcarrier spacing.

In this solution provided in this application, because the terminal device cannot learn of the occupation status of the subchannel on which RSSI or RSRP measurement is not performed, the CBR in the overall measurement window is estimated by monitoring the CBR of the slot. In this way, UE can obtain a more accurate measurement result of the congestion degree. In addition, in this method, additional signaling configuration does not need to be introduced. Therefore, signaling overheads are reduced.

With reference to the first aspect, in a possible implementation of the first aspect, the first time period includes a to-be-monitored slot in the first measurement window.

With reference to the first aspect, in a possible implementation of the first aspect, the first time period includes at least one of the following: a to-be-monitored slot that is used for partial sensing resource selection and that is in the first measurement window, a to-be-monitored active time unit that is used for DRX and that is in the first measurement window, and a time unit that is used for sidelink transmission and that is in the first measurement window.

In this solution provided in this application, the first time period includes time units in different scenarios. This helps improve an application scope of the terminal device.

With reference to the first aspect, in a possible implementation of the first aspect, the determining a CR based on a first time period includes: determining the CR based on a fourth quantity. The fourth quantity is a sum of a quantity of occupied subchannels in subchannels in the first time period and a quantity of subchannels that are reserved to be occupied and that are in the subchannels in the first time period.

With reference to the first aspect, in a possible implementation of the first aspect, the determining the CR based on a fourth quantity includes:

determining the CR based on the fourth quantity and a fifth quantity, where the fifth quantity is a quantity of subchannels in the first measurement window.

With reference to the first aspect, in a possible implementation of the first aspect, the determining the CR based on a fourth quantity includes:

determining the CR based on the fourth quantity and a sixth quantity, where the sixth quantity is a quantity of subchannels in the first time period.

In this solution provided in this application, only in a future available slot range, or a slot range in which RSSI or RSRP measurement is actually performed, receiving is actually performed, or measurement is actually performed, a proportion of a subchannel that is reserved to be used and a used subchannel to all subchannels is calculated. This helps really reflect resource usage of the terminal device, to better regulate congestion control.

With reference to the first aspect, in a possible implementation of the first aspect, the determining the CR based on a fourth quantity includes:

determining the CR based on the fourth quantity, a seventh quantity, and a second adjustment factor, where the seventh quantity is a quantity of subchannels in the first measurement window.

With reference to the first aspect, in a possible implementation of the first aspect, the second adjustment factor is a second value. The second value is a ratio of an eighth quantity to the fourth quantity. The eighth quantity is a quantity of slots included in the first measurement window.

With reference to the first aspect, in a possible implementation of the first aspect, the second adjustment factor is associated with a second value.

With reference to the first aspect, in a possible implementation of the first aspect, the second adjustment factor is configured on a resource pool by using RRC.

In this solution provided in this application, it is assumed that a proportion of an occupied subchannel to subchannels on which RSSI or RSRP measurement is not performed is associated with a proportion of an occupied subchannel to subchannels on which RSSI or RSRP measurement is performed. The actually measured CBR is adjusted. This can more accurately indicate a channel congestion degree. In addition, there are various methods for determining an adjustment factor. This helps improve an application scope of the terminal device.

According to a second aspect, an embodiment of this application provides a communication apparatus. For beneficial effects, refer to the descriptions of the first aspect. Details are not described herein again. The communication apparatus has a function of implementing the behavior in the method example in the first aspect. The function may be implemented by hardware, or may be implemented by hardware executing corresponding software. The hardware or the software includes one or more modules corresponding to the foregoing function. In a possible design, the communication apparatus includes a processing module, configured to: determine a first measurement window based on a first slot and first preset duration, and determine a channel busy ratio CBR or a channel occupancy ratio CR based on a first time period. The first time period is a time unit in the first measurement window. These modules may perform corresponding functions in the method example in the first aspect. For details, refer to the detailed descriptions in the method example. Details are not described herein again.

According to a third aspect, a communication apparatus is provided. The communication apparatus may be a receive end in the foregoing method embodiment, or a chip disposed in the receive end. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the receive end in the foregoing method embodiment.

According to a fourth aspect, a computer program product is provided. The computer program product includes computer program code. When the computer program code is run, the method performed by the transmit end in the foregoing aspects is performed.

According to a fifth aspect, a computer program product is provided. The computer program product includes computer program code. When the computer program code is run, the method performed by the receive end in the foregoing aspects is performed.

According to a sixth aspect, this application provides a chip system. The chip system includes a processor, configured to implement functions of the transmit end in the method in the foregoing aspects. In a possible design, the chip system further includes a memory, configured to store program instructions and/or data. The chip system may include a chip, or may include a chip and another discrete component.

According to a seventh aspect, this application provides a chip system. The chip system includes a processor, configured to implement functions of the receive end in the method in the foregoing aspects. In a possible design, the chip system further includes a memory, configured to store program instructions and/or data. The chip system may include a chip, or may include a chip and another discrete component.

According to an eighth aspect, this application provides a computer-readable storage medium. The computer-readable storage medium stores a computer program. When the computer program is run, the method performed by the transmit end in the foregoing aspects is implemented.

According to a ninth aspect, this application provides a computer-readable storage medium. The computer-readable storage medium stores a computer program. When the computer program is run, the method performed by the receive end in the foregoing aspects is implemented.

According to a tenth aspect, this application provides a communication system, including the communication apparatus in the third aspect.

**BRIEF DESCRIPTION OF DRAWINGS**

To describe the technical solutions in embodiments of this application or in the background more clearly, the following briefly describes the accompanying drawings in embodiments of this application or in the background.

FIG. 1 is a schematic flowchart of a communication system according to an embodiment of this application;
FIG. 2 is a schematic diagram of a structure of a CBR measurement window according to an embodiment of this application;
FIG. 3 is a schematic diagram of DRX according to an embodiment of this application;
FIG. 4 is a schematic diagram of a structure of a subchannel according to an embodiment of this application;
FIG. 5 is a schematic diagram of a partial sensing resource selection manner according to an embodiment of this application;
FIG. 6 is a schematic diagram of configuring DRX for a terminal device according to an embodiment of this application;

FIG. 7 is a schematic diagram of configuring a partial sensing resource selection manner for a terminal device according to an embodiment of this application;
FIG. 8 is a schematic diagram of configuring half-duplex for a terminal device according to an embodiment of this application;
FIG. 9 is a schematic flowchart of a channel congestion parameter determining method according to an embodiment of this application;
FIG. 10 is a schematic flowchart of a channel congestion parameter determining apparatus according to an embodiment of this application;
FIG. 11 is a schematic flowchart of a channel congestion parameter determining apparatus according to an embodiment of this application; and
FIG. 12 is a schematic diagram of a structure of a terminal device according to an embodiment of this application.

**DESCRIPTION OF EMBODIMENTS**

To make a person skilled in the art understand the solutions in this application better, the following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

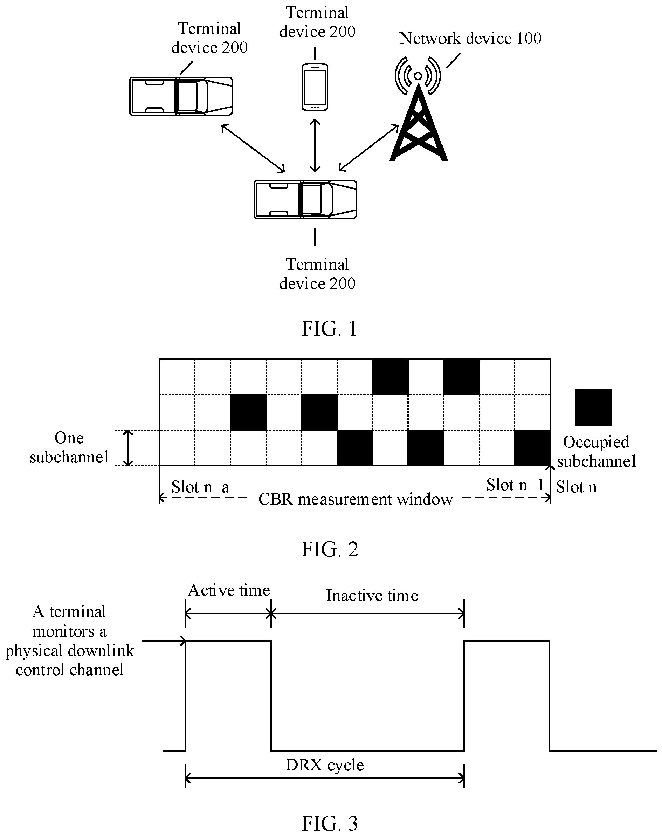

FIG. 1 is a schematic diagram of a communication system according to this application. The communication system may include one or more network devices 100 (only one network device 100 is shown) and one or more terminal devices 200 connected to the network device 100. Alternatively, the communication system may include one or more terminal devices 200.

The network device 100 may be a device that can communicate with the terminal device 200. The network device 100 may be any device having a wireless transceiver function, and includes but is not limited to a NodeB NodeB, an evolved NodeB eNodeB, a base station in a fifth generation (fifth generation, 5G) communication system, a base station or a network device in a future communication system, an access node in a Wi-Fi system, a wireless relay node, a wireless backhaul node, or the like. The network device 100 may alternatively be a radio controller in a cloud radio access network (cloud radio access network, CRAN) scenario. The network device 100 may alternatively be a small cell, a transmission reference point (transmission reference point, TRP), or the like. A specific technology and a specific device form that are used by the network device are not limited in embodiments of this application.

The terminal device 200 is a device having a wireless transceiver function. The device may be a device deployed on land, including an indoor or outdoor device, or a hand-held, wearable, or vehicle-mounted device, may be deployed on a water surface, for example, on a ship, or may be deployed in air, for example, on aircraft, a balloon, and a satellite. The terminal device may be a mobile phone (mobile phone), a tablet computer (Pad), a computer having a wireless transceiver function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. The terminal device may be referred to as a user equipment (user equipment, UE), an access terminal device, a UE unit, a mobile station, a mobile console, a remote station, a remote terminal device, a mobile device, a terminal (terminal), a wireless communication device, a UE agent, a UE apparatus, or the like.

The communication system includes a vehicle-related communication system, to be specific, transmission between terminals and transmission between a vehicle and a terminal, and also includes a communication system between a network device and a terminal/vehicle, to be specific, transmission between a network device and a terminal and transmission between a network device and a vehicle.

It should be noted that the terms "system" and "network" may be used interchangeably in embodiments of the present invention. "A plurality of" means two or more than two. In view of this, "a plurality of" may also be understood as "at least two" in embodiments of the present invention. The term "and/or" describes an association relationship between associated objects and indicates that three relationships may exist. For example, A and/or B may indicate the following three cases: Only A exists, both A and B exist, and only B exists. In addition, the character"/", unless otherwise specified, generally indicates an "or" relationship between the associated objects.

A channel busy radio (Channel Busy Radio, CBR) measured in a slot n is defined as, in a CBR measurement window [n-a, n-1], a proportion of a subchannel whose sidelink (Sidelink) RSSI or RSRP measurement value exceeds a preconfigured or configured threshold to all subchannels in a resource pool. a is configured based on a higher layer parameter, and is equal to 100 slots or 100 ms. A slot is indicated by a physical slot index.

For example, in a CBR measurement window shown in FIG. 2, there are 33 single-slot subchannels. (For ease of understanding, a principle is described by using an example in which the CBR measurement window is 11 slots and a frequency domain bandwidth is 3 subchannels, but actually the CBR measurement window is 100 slots or 100 ms, and the frequency domain bandwidth is more than 3 subchannels). In the figure, if there are 7 occupied subchannels, a CBR is 7/33. A subchannel whose SL-RSSI measurement value is greater than a threshold is considered as an occupied subchannel. In other words, there are 7 subchannels considered as a numerator. A subchannel whose RSSI measurement value detected by a terminal device is less than or equal to the threshold is not considered as an occupied subchannel. In other words, there are 33-7=26 subchannels not considered as a numerator.

A time-domain granularity of the single-slot subchannel is one slot, and a frequency domain granularity is one subchannel, that is, one subchannel in one slot, and a count is 1.

On a sidelink, sidelink control information (Sidelink Control Information, SCI) is divided into two stages: first-stage SCI and second-stage SCI. The first-stage SCI is carried on a physical sidelink control channel (Physical Sidelink Control Channel, PSCCH), and the second-stage SCI is carried on a physical sidelink shared channel (Physical Sidelink Share Channel, PSSCH).

An SL-RSSI is defined as a linear average of total receive power of OFDM symbols configured as a PSCCH and a PSSCH starting from a second orthogonal frequency division multiplexing (Orthogonal Frequency-Division Multiplexing, OFDM) symbol in a slot in which the configured subchannel is located.

A channel occupancy ratio (Channel Occupancy Ratio, CR) measured in a slot n is defined as a ratio of a sum of a quantity of occupied subchannels in slots [n-a, n-1] and a quantity of subchannels that are reserved to be occupied and that are in slots [n, n+b] to a quantity of candidate subchannels configured in a transmission resource pool in slots [n-a, n+b]. a is a positive integer, b is 0 or a positive integer, a+b+1=1000 slots or 1000 slots (configured by using a higher layer parameter), b<(a+b+1)/2, and n+b should not exceed a slot in which a last transmission subchannel reserved for current transmission is located. The slot is indicated by a physical slot index.

The quantity of subchannels is a number of subchannels.

The CR is evaluated when transmission is performed each time.

If a channel occupancy ratio upper limit (Channel Occupancy Ratio_limit, CR_limit) is configured for the terminal device by using a higher layer parameter, and a PSSCH is transmitted in the slot n, the terminal device should meet a limit of the following formula:

$$\sum_{i \geq k} CR(i) \leq CR\_limit(k)$$

CR(i) corresponds to a PSSCH whose priority value is i sent in a slot n-N, and CR_limit(k) is determined based on a priority value k and a CBR range of the CBR measured in the slot n-N. N is a congestion processing control time, and in a unit of a slot. Different subcarrier spacings correspond to different N. Two tables show a correspondence between a subcarrier spacing and N as follows:

**Table 1**

| μ | N |
|---|---|
| 0 | 2 |
| 1 | 2 |
| 2 | 4 |
| 3 | 8 |

**Table 2**

| μ | N |
|---|---|
| 0 | 2 |
| 1 | 4 |
| 2 | 8 |
| 3 | 16 |

If the terminal device meets the foregoing formula, that is, the CR does not exceed the CR limit, transmission depends on the terminal device, and discarding current transmission or the like is included.

FIG. 3 is a schematic diagram of DRX according to an embodiment of this application. A DRX cycle includes active time for DRX and inactive time for DRX. A terminal device monitors SCI transmission in the active time, and does not monitor SCI transmission in the inactive time. The SCI transmission includes first-stage SCI transmission and/or second-stage SCI transmission.

Radio resource control (Radio Resource Control, RRC) mainly controls a DRX operation based on the following parameters: a DRX offset value (delay before the active time for DRX starts), a DRX cycle, a length of a timer for the active time for DRX, and a length of a DRX deactivation timer.

A partial sensing (Partial sensing) resource selection manner includes the following steps (the following steps are not subject to an execution sequence).

Step 1:

(1) A single candidate slot resource $R_{x,y}$ used for PSSCH transmission is defined as a set of consecutive subchannels, and an index of a subchannel in a slot $t_y^{SL}$ is x+j. j=0, 1, ..., L-1. L is a quantity of consecutive subchannels.

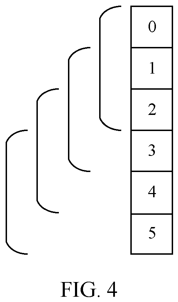

For example, FIG. 4 is a schematic diagram of a structure of a subchannel. It is assumed that a quantity of subchannels in a resource pool is 6, and L is 3, it is determined that there are four slots, and each slot includes three consecutive subchannels.

(2) At least Y candidate slots in a resource selection window [n+T_1, n+T_2] are determined in a slot n. T_1 and T_2 meet a condition T_1≤4. T_2min (prio_TX)≤T_2≤100.

T_2min (prio_TX) is configured by using RRC. If the RRC is not configured, T_2 meets a condition: 20 ≤ T_2 ≤ 100.

Selection of T_2 needs to meet a delay requirement, and Y needs to be greater than or equal to a lower limit configured by using RRC.

All candidate slots in the resource selection window are denoted as $M_{total}$.

Step 2: If a candidate slot X falls within at least Y candidate slots in the step 1, the terminal device determines, based on a period P configured by using RRC, a slot Z in which monitoring is performed, and learns of PSCCH decoding and RSSI measurement results of a subchannel corresponding to the slot Z. There is a difference of a period P between the slot X and the slot Z.

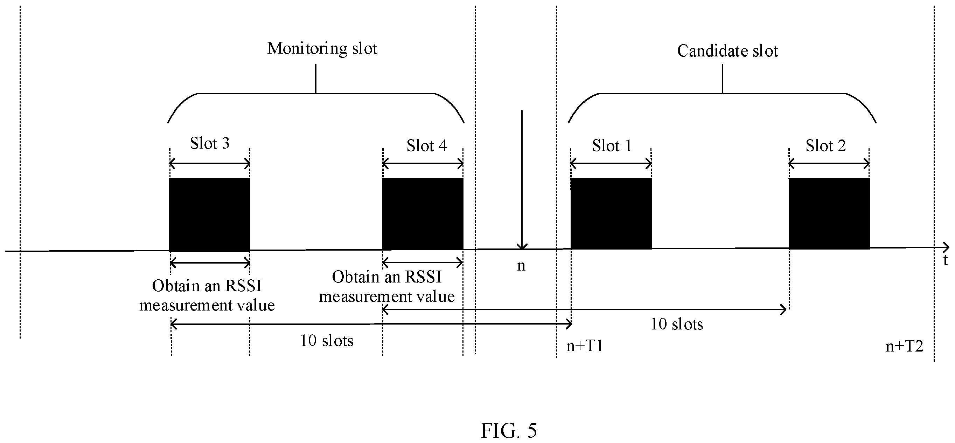

For example, as shown in FIG. 5, it is assumed that the resource selection window is triggered in the slot n, the period P is 10 slots, and candidate slots of the resource selection window include a slot 1 and a slot 2. Because there is a difference of 10 slots between the slot 1 and a slot 3, and there is a difference of 10 slots between the slot 2 and a slot 4. Therefore, slots in which monitoring is performed are the slot 3 and the slot 4.

Step 3: Determine a threshold $TH_{ab}$ based on RRC configuration.

Step 4: Initialize scheduling assignment (Scheduling Assignment, SA) as a candidate slot set, and initialize a scheduling block (Scheduling Block, SB) as an empty set.

Step 5: The terminal device excludes the candidate slot during SA based on time-frequency resource indication information of SCI and comparison between a reference signal received power (Reference Signal Receiving Power, RSRP) measurement value and the threshold $TH_{ab}$. A slot in which monitoring is not performed is correspondingly excluded from a candidate resource set. If a time-frequency resource indicated by SCI overlaps a candidate resource, and an RSRP measurement value corresponding to SCI is greater than the threshold $TH_{ab}$, the slot in which monitoring is performed is excluded.

A service period (a resource reservation period) may be {0, 1:99, 100, 200, 300, 400, 500, 600, 700, 800, 900, 1000} ms in 110 cases. A maximum of 16 possible resource reservation periods may be configured on a resource pool. In addition, for a periodic service, UE sends {transport block (Transport Block, TB)1, TB2, TB3, ...} based on the foregoing specific period, which is referred to as initial transmission. Each TBi corresponds to several retransmissions. In one piece of SCI, a maximum quantity Nmax of reserved resources is specified for initial transmissions and retransmissions (Nmax is configured on the resource pool by using radio resource control (Radio Resource Control, RRC), and a value can be 2 or 3). Each TBi may be retransmitted for a maximum of 32 times.

The service period may be specifically a PSSCH sending period, a data sending period, a period indicated by a period field in control information (such as SCI) on a first resource, or the like. The period field may be a resource reservation period (resource reservation period) field. A specific field name of the period field is not limited in this application.

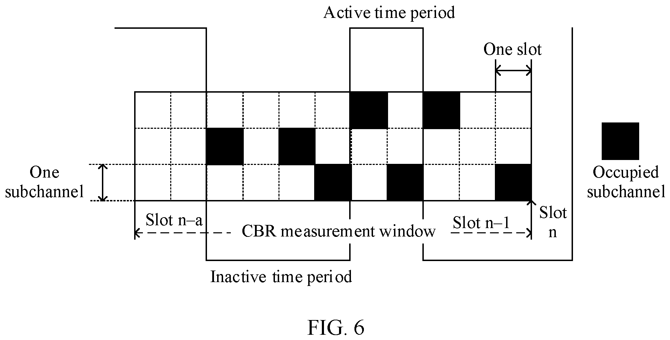

FIG. 6 is a schematic diagram of configuring a DRX function for a terminal device. Because the terminal device monitors SCI and performs RSSI or RSRP measurement only in active time, a quantity of occupied subchannels is 2, and a CBR is 7/33. That is, a channel congestion degree is less than an actual channel congestion degree. In addition, because an upper limit of a channel occupancy ratio (Channel Occupancy Ratio_limit, CBR) corresponding to a measured CBR is greater than a CR_limit corresponding to an actual CBR, a terminal device that is not configured with the DRX function may send more data packets at a same congestion degree and a same priority of to-be-sent data, and there is a problem of unfairness to a terminal device configured with DRX.

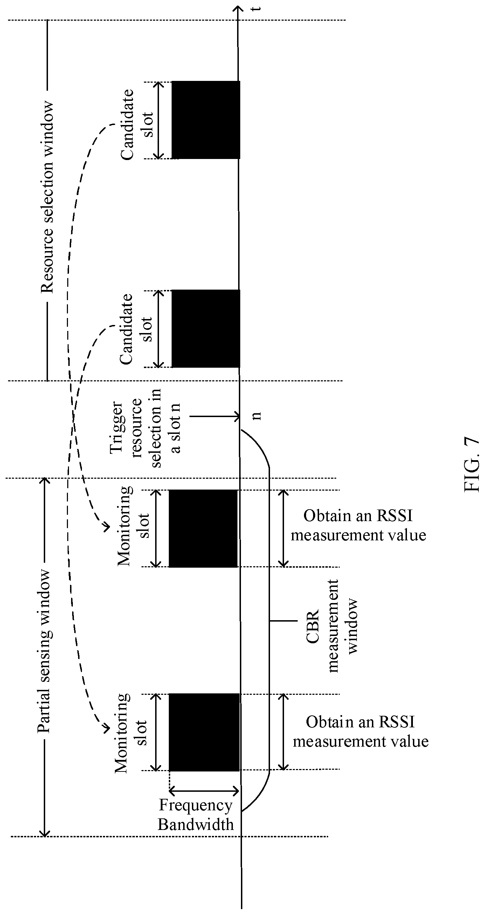

FIG. 7 is a schematic diagram of configuring a partial sensing resource selection manner for a terminal device. Because the terminal device monitors SCI and performs RSSI or RSRP measurement only in active time, and does not monitor the SCI in an unconfigured slot, the terminal device cannot learn of channel occupation statuses of a part of unconfigured slots. Therefore, a measured channel congestion degree is less than an actual channel congestion degree, and consequently, a measured CBR is less than an actual CR.

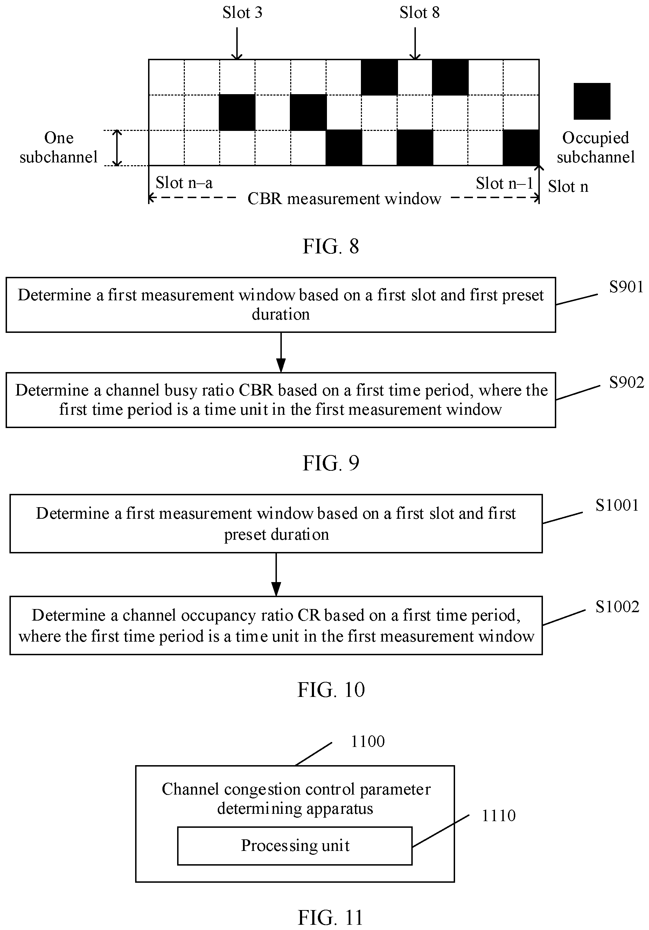

As shown in FIG. 8, a slot 3 and a slot 8 are sending slots. Because a terminal device cannot monitor SCI and perform RSSI or RSRP measurement in the sending slots, channel occupancy statuses of the slot 3 and the slot 8 cannot be learned of. Therefore, a measured CBR is 5/33 and is less than an actual value 7/33, and consequently, a measured channel congestion degree is less than an actual channel congestion degree.

FIG. 9 is a schematic flowchart of a channel congestion parameter determining method according to an embodiment of this application. The method may include the following steps.

S901: Determine a first measurement window based on a first slot and first preset duration.

The first measurement window is a CBR measurement window. The CBR measurement window is used to perform CBR measurement.

The first preset duration is configured by using a higher layer parameter, may be 100 slots, may be 100 ms, or may be other duration. The first preset duration may be understood as a quantity, a value, or a parameter.

The first slot is indicated by a physical slot index. The first slot may be a current slot. Alternatively, it may be understood that the first slot is a CBR measurement slot. Alternatively, it may be understood that the first slot is a slot for triggering CBR measurement. Alternatively, it may be understood that an index of the first slot is a physical slot index. The physical slot index is an index of a slot set in a resource pool and an index of a slot set outside the resource pool. The resource pool is a set of time-frequency resources used for sidelink transmission. The index of the slot set in the resource pool is a logical slot index.

For example, the first slot and the first measurement window may be determined based on the physical slot index or the logical slot logic.

For example, the first measurement window is determined based on the first slot and the first preset duration. In other words, after the first slot is determined based on the physical slot index, the first measurement window is established based on a sum of duration before the first slot as a time unit of the first preset duration. Therefore, duration of the first measurement window is the first preset duration.

For example, if the first preset duration is a, and the first slot is n, the first measurement window is [n-a, n-1]. a is an integer. The first preset duration is associated with a subcarrier spacing. The first preset duration may be different in different subcarrier spacings.

For example, if the first slot is n, and the first preset duration is 50 slots, the first measurement window is [n-50, n-1]. For example, determining the first measurement window based on the first slot and the first preset duration further includes: determining the first measurement window based on the first slot, the first preset duration, and a first parameter. The first parameter may be an adjustment value. The adjustment value is determined by a terminal device, or is configured by a network device by using RRC, so that a quantity of actually measured slots, a quantity of really measured slots, a quantity of actually received slots, or a quantity of actually sensed slots included in the first measurement window is the first preset duration.

For example, the first measurement window may be [n-a-b, n-1], where a is the first preset duration, and b is a quantity of slots that are not actually measured, a quantity of slots that are not really measured, a quantity of slots that are not actually received, or a quantity of slots that are not actually sensed within [n-a, n-1].

For example, the first measurement window may be [n-a-b, n-1], where a is the first preset duration, and b is a quantity of slots that are not actually measured, a quantity of slots that are not really measured, a quantity of slots that are not actually received, or a quantity of slots that are not actually sensed in the first measurement window.

Because a CBR measurement window is prolonged, the terminal device can obtain more samples to approximate an actual congestion status, which helps improve accuracy of channel congestion measurement.

For example, the first measurement window may be [n-a-b, n-1], where a is the first preset duration, and b is a quantity of slots that are not actually measured in a time period within which the actually measured slot falls. The actually measured slot may alternatively be referred to as a really measured slot, a slot that is not actually received, or a slot that is not actually sensed.

For example, the first measurement window may be [n-a-b, n-1], where a is the first preset duration, and b is an integer greater than or equal to 0, and is used to adjust a quantity of actually measured slots, a quantity of really measured slots, a quantity of actually received slots, or a quantity of actually sensed slots within [n-a-b, n-1] to a.

Because a CBR measurement value on a resource within the first preset duration is obtained, the terminal device can obtain more samples to approximate an actual congestion status, which helps improve accuracy of channel congestion measurement.

For example, determining b may be associated with one or more of the first preset period, an average quantity of transmissions, and a subcarrier spacing. For example, the first preset duration is a, b=100/(P-1), b=100*N/(P-N), or b=100*N/(2$^{\mu}$*P-N). N is the average quantity of transmissions. $\mu$ is the subcarrier spacing.

For example, in existing [n-100, n-1] slots, 100 slots should be measured, but only 80 slots are actually measured due to half-duplex. In this case, the CBR measurement window needs to be increased to 125 slots, to ensure that 100 slots are actually measured to calculate a CBR. That is, in this case, b=25 slots are added to the measurement window, and the actually measured 100 slots are used to calculate the CBR.

For example, b may have one or more values, and different preset periods or different period sets correspond to different b. For example, a period {1, 2, ..., 9, 10} ms corresponds to b1, a period {11, 12, ..., 19, 20} ms corresponds to b2, ..., a period {91, 92, ..., 99, 100} ms corresponds to b10, and a period {200, 300, ..., 1000} ms corresponds to b11. In addition, b1≤b2≤...≤b11.

S902: Determine the CBR based on a first time period.

For example, the first time period is a receiving time unit in the first measurement window, to be specific, the receiving time unit includes at least one of a sensed time-domain resource set, a monitored time-domain resource set, a measured time-domain resource set, an actually measured time-domain resource set, and an actually received time-domain resource set in the first measurement window. The time unit herein may be understood as a time-domain resource, and may be a slot, a symbol, a subslot, or the like.

For example, the receiving time unit may be understood as a sensed time unit, a time unit for RSSI measurement, a time unit for RSRP measurement, a received time unit, an actually received time unit, or a monitored time unit. The time unit herein may be understood as a time-domain resource, and may be a slot, a symbol, a subslot, or the like.

For example, determining the CBR based on the first time period may be understood as performing CBR measurement on a resource set corresponding to the first time period. It may be understood that during CBR measurement, a resource set corresponding to a time unit other than the first time period in the first measurement window is excluded from the resource set corresponding to the first measurement window.

For example, the first time period includes at least one of the following: an active time period that is used for discontinuous reception DRX and that is in the first measurement window, a monitoring time unit that is used for partial sensing resource selection and that is in the first measurement window, a non-sending time unit in the first measurement window, and a time unit that is used for sidelink transmission and that is in the first measurement window. The time unit herein may be understood as a time-domain resource, and may be a slot, a symbol, a subslot, or the like.

For example, the first time period is one or more time units, and may be a set of nonconsecutive time units, or may be a set of consecutive time units, or may be a set that includes the nonconsecutive time units and the consecutive time units. The time unit herein may be understood as a time-domain resource, and may be a slot, a symbol, a subslot, or the like.

For example, the first time period is one or more slots. If a part of symbols in one slot are actually received or measured symbols, the terminal device does not perform receiving or measurement in other symbols. In this case, a quantity of subchannels in the part of symbols is the same as a quantity of subchannels in the slot.

For example, the first time period is one or more slots. If a part of symbols in one slot are actually received or measured symbols, the terminal device does not perform receiving or measurement in other symbols. In this case, subchannels in the part of symbols are not measured or counted, that is, the subchannels are excluded when determining whether a first measurement value of the subchannels is greater than a first threshold or a second threshold.

It may be understood that the active time period for discontinuous DRX may be understood as a set of nonconsecutive time units, or may be a set of consecutive time units, or may be a set that includes the nonconsecutive time units and the consecutive time units. The time unit herein may be understood as a time-domain resource, and may be a slot, a symbol, a subslot, or the like.

It may be understood that the monitoring time unit that is used for partial sensing resource selection and that is in the first measurement window may be understood or replaced with a monitoring time unit that is used to perform partial sensing resource selection and that is in the first measurement window. Alternatively, the monitoring time unit may be understood or replaced with an intersection or an overlapping time unit between the first measurement window and the monitoring time unit used to perform partial sensing resource selection. The time unit herein may be understood as a time-domain resource, and may be a slot, a symbol, a subslot, or the like.

It may be understood that the actual monitoring time unit in the first measurement window may be understood or replaced with the non-sending time unit in the first measurement window. The actual monitoring time unit may be understood as a set of nonconsecutive time units, or may be a set of consecutive time units, or may be a set that includes the nonconsecutive time units and the consecutive time units. The time unit herein may be understood as a time-domain resource, and may be a slot, a symbol, a subslot, or the like.

For example, if the current slot is m, slots included in the first measurement window are [m-50, m-1]. If the terminal device has a DRX function, and the terminal device is in an active state in a time period [m-50, m-40], the first time period includes [m-50, m-40]. Herein, being in the active state may be understood as being in active time. If the terminal device uses partial sensing resource selection, and the terminal monitors SCI in slots m-30 and m-28, the first time period includes the slots m-30 and m-28. Herein, monitoring the SCI may be understood as monitoring first-stage SCI and/or second-stage SCI, or may be understood as blindly detecting a PSCCH. If the terminal device sends data in slots m-29 and m-2, the first time period includes slots other than the slots m-29 and m-2 in the first measurement window. It may be understood that the slots m-29 and m-2 are excluded from the first time period. If slots for sidelink transmission are m-52, m-25, and m-1, the first time period includes the slots m-25 and m-1.

For example, the CBR is a ratio of a first quantity to a second quantity. The first quantity is a quantity of subchannels whose first measurement values are greater than or equal to the first threshold or the second threshold and that are in subchannels in the first time period. The second quantity is a quantity of subchannels in the first measurement window. The first measurement value is an RSSI measurement value or an RSRP measurement value. Herein, that the CBR is the ratio of the first quantity to the second quantity may be understood as that the CBR measurement value=(the first quantity/the second quantity). The first measurement value is obtained when the terminal device monitors SCI transmission. The SCI includes the first-stage SCI and/or the second-stage SCI. If the first measurement value is greater than or equal to the first threshold or the second threshold, it indicates that the subchannel is occupied. The subchannels in the first time period are all subchannels included in the first time period. Alternatively, the subchannels in the first time period are all subchannels corresponding to the first time period. The subchannels in the first measurement window are all subchannels in the first measurement window. Alternatively, the subchannels in the first measurement window are all subchannels corresponding to the first measurement window. The subchannels in the first measurement window include the subchannels in the first time period. Alternatively, the subchannels in the first measurement window may be all time-frequency resources or all subchannels in the first measurement window. Alternatively, the subchannels in the first measurement window are all time-frequency resources or all subchannels in the resource pool in the first measurement window.

For example, if the first measurement window is [n-a, n-1], the subchannels in the first measurement window are total subchannels within [n-a, n-1]. The subchannels in the first measurement window are total single-slot subchannels. A count of a subchannel in a slot is 1.

For example, the CBR is a ratio of a first quantity to a second quantity. The first quantity is a quantity of subchannels whose first measurement values are greater than or equal to the first threshold or the second threshold and that are in subchannels in the first time period. The second quantity is a quantity of subchannels in the first measurement window. The first measurement value is an RSSI measurement value or an RSRP measurement value. It may be further understood that the terminal device performs CBR measurement on the time-frequency resource in the first measurement window. The measurement value is a proportion of an occupied subchannel to subchannels in the first measurement window. Being occupied means that the first measurement value is greater than or equal to the first threshold or the second threshold.

For example, the first threshold is a threshold used by the terminal device in an energy-saving mode. The second threshold is a threshold used by the terminal device in a non-energy-saving mode. The terminal device in the energy-saving mode is a terminal device that uses a partial sensing resource selection manner, or a terminal device in a DRX mode, or a terminal device that uses the partial sensing resource selection manner and is in the DRX mode.

For example, the terminal device obtains the first threshold and the second threshold, uses the first threshold when the terminal device is in the energy-saving mode or the DRX mode or uses the partial sensing resource selection manner, and uses the second threshold when the terminal device is in the non-energy-saving mode or a non-DRX mode or uses a full sensing resource selection manner. The first threshold and the second threshold may be configured on the resource pool by the network device. Configuration signaling may be RRC. If the first threshold is not configured, the second threshold is used. It may be understood that the second threshold is an RSSI measurement value or RSRP measurement value for CBR measurement.

For example, the first threshold is associated with partial sensing resource selection, and the second threshold is associated with full sensing resource selection. Alternatively, the first threshold is associated with DRX, and the second threshold is associated with non-DRX.

For example, if both the first threshold and the second threshold are configured on the resource pool by using radio resource control RRC, the first quantity is a quantity of subchannels whose first measurement values are greater than or equal to the first threshold and that are in the subchannels in the first time period. If the first threshold is not configured on the resource pool, the first quantity is a quantity of subchannels whose first measurement values are greater than or equal to the second threshold and that are in the subchannels in the first time period. Alternatively, if the first threshold is not configured on the resource pool, congestion control is disabled. Disabling congestion control is not performing CBR measurement or reporting.

For example, the first threshold is associated with a first preset period. Alternatively, the first threshold is associated with a first period set. The first period set includes the first preset period. It should be understood that different first preset periods are associated with different first thresholds, and a smaller preset period indicates a smaller first threshold. Different first period sets are associated with different first thresholds.

For example, a period set {1, 2, ..., 9, 10} ms is associated with a threshold RSSI 1, a period set {11, 12, ..., 19, 20} ms is associated with a threshold RSSI 2, ..., a period set {91, 92, ..., 99, 100} ms is associated with a threshold RSSI 10, and a period set {200, 300, ..., 1000} ms is associated with a threshold RSSI 11.

For example, if a service period changes in the measurement window or a non-periodic service occurs, a plurality of thresholds RSSI i are generated. Therefore, an average value or a weighted average value of the plurality of thresholds RSSI i needs to be obtained.

For example, if services change in the measurement window, which are respectively PTx1, PTx2, and PTx3, the services correspond to RSSI thresholds RSSI 1, RSSI 2, and RSSI 3. In this case, a corrected RSSI threshold=(RSSI 1+RSSI 2+RSSI 3)/3.

It should be understood that the first time period may include the non-sending time unit in the first measurement window, and a period in which the terminal device sends a service includes the first preset period.

Because the terminal device performs RSSI or RSRP measurement only in a part of slots and/or symbols, and does not perform RSSI or RSRP measurement in another part of slots and/or symbols, an occupation status of a subchannel on which RSSI or RSRP measurement is not performed cannot be learned of. As a result, a measured CBR is less than or equal to an actual CBR. Therefore, different thresholds are used to adjust the CBR measured by the terminal device that is in the energy-saving mode or that uses the partial sensing resource selection manner and/or DRX. This can more accurately indicate a channel congestion degree. In addition, when the first threshold associated with partial sensing resource selection and/or the DRX function is not configured, the second threshold is used, so that the measured CBR can be increased to reduce a difference between the measured CBR and the actual CBR, to improve accuracy of channel congestion degree measurement.

For example, a first CBR range associated with the CBR is determined after the CBR is determined. A first upper limit or a second upper limit is determined based on the first CBR range and a first priority value. When a PSSCH is sent, a condition needs to be met: The first CR is less than or equal to the first upper limit or the second upper limit. It may be understood that the PSSCH is sent when the first CR is less than or equal to the first upper limit or the second upper limit.

It should be understood that both the first upper limit and the second upper limit are CR upper limits.

It should be understood that there is an association relationship between the first CBR range and the first priority value and the first upper limit.

For example, the first CR may be preset. Alternatively, the first CR is determined by using the following steps S1001 and S 1002.

For example, the terminal device obtains the first upper limit and the second upper limit, the terminal device in the energy-saving mode uses the first upper limit, and the terminal device in the non-energy-saving mode uses the second upper limit. Being in the energy-saving mode may be understood as being in the DRX mode or using the partial sensing resource selection manner or using a randomly selected resource selection manner. Being in the non-energy-saving mode may be understood as being in the non-DRX mode or using the full sensing resource selection manner.

For example, the first upper limit is associated with partial sensing resource selection, and the second upper limit is associated with full sensing resource selection. Alternatively, the first upper limit is associated with DRX, and the second upper limit is associated with non-DRX.

It should be understood that different levels of energy-saving modes in which the terminal devices are located may respectively correspond to different CR upper limits. There may be one or more CR upper limits.

For example, the first upper limit and the second upper limit are configured on the resource pool by using RRC. Optionally, the first upper limit is less than the second upper limit.

For example, the first time period includes an active time period that is used for DRX and that is in the first measurement window, and/or the first time period includes a monitoring time unit that is used for partial sensing resource selection and that is in the first measurement window.

It should be understood that, when the first upper limit is not configured, the second upper limit is used, or congestion control is disabled. Disabling congestion control is not performing CR measurement and/or reporting.

For example, the first upper limit is configured on the resource pool by using RRC. Alternatively, the first upper limit is associated with a third preset period. Alternatively, the first upper limit is associated with a period set that includes a third preset period. Alternatively, the first upper limit is associated with the first priority value. Alternatively, the first upper limit is associated with a first priority value set that includes the first priority value.

For example, the first time period includes a non-sending time unit in the first measurement window, and a period in which the terminal device sends a service is a third preset period.

It should be understood that different third preset periods correspond to different first upper limits, a smaller third preset period indicates a smaller first upper limit, and different period sets associated with the third preset periods correspond to different first upper limits.

It should be understood that different first priority value sets are associated with different first upper limits, priority values are classified into 1 to 8 levels, and a smaller first priority value indicates a higher priority. Therefore, different first priority values correspond to different first upper limits, a smaller first priority value is associated with a larger first upper limit and more to-be-sent data packets.

Because the terminal device learns of an RSSI or RSRP measurement value of a part of slots, a measured CBR value is less than or equal to a real CBR value, and a CR upper limit corresponding to a CBR range of the measured CBR remains unchanged or increases, which is unfair to a terminal device that is used for non-partial sensing resource selection and/or non-DRX and/or that is in a non-energy-saving mode. A plurality of CR upper limits are set, so that a CR upper limit obtained by a terminal device that is used for partial sensing resource selection and/or DRX and/or that is in an energy-saving mode is close to a real CR upper limit. This ensures fairness of data transmission.

For example, after the CBR is determined, a second CBR range associated with the CBR is determined. A third upper limit is determined based on the second CBR range, a second priority value, and a third adjustment factor. A PSSCH is sent when a second CR is less than or equal to the third upper limit.

For example, the second CR may be preset. Alternatively, the first CR is determined by using the following steps S1001 and S1002.

For example, the third upper limit may be represented according to a formula L11 * offset 1. L11 is an upper limit associated with the second CBR range and the second priority value, and offset1 is the third adjustment factor.

For example, offset1 may be configured on the resource pool. offset 1 may be configured by the network device by using RRC.

For example, the third upper limit may be represented according to a formula (L12-offset2). L12 is an upper limit associated with the second CBR range and the second priority value, and offset2 is the third adjustment factor.

For example, offset2 may be configured on the resource pool. offset2 may be configured by the network device by using RRC.

It should be understood that the third adjustment factor may be 0, may be 1, or may be a number from 0 to 1. Alternatively, a value of offset1 ranges from 0.5 to 1. A value of offset2 ranges from 0 to 0.5.

For example, the first time period includes an active time period that is used for DRX and that is in the first measurement window, and/or a monitoring time unit that is used for partial sensing resource selection and that is in the first measurement window.

For example, the third adjustment factor is configured on the resource pool by using RRC. Alternatively, the third adjustment factor is associated with the second priority value.

For example, the first time period includes a non-sending time unit in the first measurement window, and a period in which the terminal device sends a service is a fourth preset period.

For example, the third adjustment factor is associated with the fourth preset period. Alternatively, the third adjustment factor is associated with a second period set, and the second period set includes the fourth preset period. Alternatively, the third adjustment factor is associated with the second priority value. Alternatively, the third adjustment factor is associated with a second priority value set, and the second priority value set includes the second priority value.

It should be understood that different second priority values correspond to different third adjustment factors. Because different priority values correspond to different adjustment factors, and priority values are classified into 1 to 8 levels, each priority value may correspond to one adjustment factor, or a plurality of priority values may correspond to one adjustment factor. A smaller priority value indicates a higher priority, a larger adjustment factor, a larger CR upper limit, and more to-be-sent data packets.

It should be understood that a smaller fourth preset period indicates a smaller third adjustment factor, different second period sets are associated with different third adjustment factors, and different priority value sets are associated with different adjustment factors.

In this solution provided in this application, because the terminal device learns of an RSSI or RSRP measurement value of a part of slots, a measured CBR value is less than or equal to a real CBR value, and a CR upper limit corresponding to a CBR range of the measured CBR remains unchanged or increases, which is unfair to a terminal device that is used for non-partial sensing resource selection and/or non-DRX and/or that is in a non-energy-saving mode. Therefore, adjusting the CR upper limit helps ensure fairness of data transmission.

For example, a CBR is a ratio of the first quantity to a third quantity. The third quantity is a quantity of subchannels in the first time period.

For example, it is assumed that the first time period includes a slot 1 and a slot 2, and a frequency domain bandwidth is 10 subchannels. A quantity of subchannels corresponding to the first time period is a sum of a quantity of subchannels corresponding to a slot A and a quantity of subchannels corresponding to a slot B, that is, 20. It is assumed that five subchannels are occupied in the slot A. One subchannel is occupied in the slot B. In this case, a value of the CBR is (5+1)/20=0.3.

For example, the terminal device performs CBR measurement in a time-frequency resource set in the first time period. It may be understood that CBR measurement is performed in the time-frequency resource set included in the first time period.

For example, DRX duration may be in a unit of a symbol, or may be in a unit of a slot. It should be understood that when the DRX duration is calculated in a time unit of a symbol, a quantity of subchannels may be determined in a unit of a slot, that is, a count of one subchannel in one slot is 1. Alternatively, a quantity of subchannels may be determined in a unit of a symbol, that is, a count of one subchannel in one symbol is 1. The first measurement value is a linear average value of signal strength on a single symbol, or may be a linear average value of signal strength on a symbol that is actually measured in one slot and that is used for PSCCH and/or PSSCH transmission. When the first time period includes a first part of symbols in a second slot, a quantity of subchannels corresponding to the second slot is determined in a unit of a slot. The first part of symbols in the second time slot are an overlapping part between the first time period and active time for DRX. A second part of symbols in the second slot are an overlapping part between the first time period and inactive time for DRX. The second slot includes the first part of symbols and the second part of symbols, and the first measurement value of the subchannel corresponding to the second slot is a linear average value of signal strength on the first part of symbols in the second slot. It may be understood herein that it is determined, based on the first measurement value of a part of symbols in the second slot, whether the first measurement value of a subchannel in the part of symbols is greater than the first threshold or the second threshold.

When the first time period includes the first part of symbols in the second slot, CBR measurement may not be performed on a subchannel corresponding to the first part of symbols. In other words, whether the first measurement value of the subchannel corresponding to the first part of symbols is greater than the first threshold or the second threshold is not considered.

Because a subchannel on which RSSI measurement is not performed may be occupied or may not be occupied, the terminal device cannot learn whether the subchannel on which RSSI or RSRP measurement is not performed is occupied. Therefore, a subchannel on which RSSI or RSRP measurement is not performed is excluded from CBR calculation, and only a proportion of an occupied subchannel to subchannels on which RSSI or RSRP measurement is performed is considered. This can more accurately indicate a channel congestion degree.

For example, the CBR may be represented according to a formula (C1/C2)*offset3. C1 is a quantity of subchannels whose first measurement values are greater than or equal to the first threshold or the second threshold and that are in subchannels in the first time period. C2 is a quantity of subchannels in the first measurement window. offset3 is a first adjustment factor.

For example, the first adjustment factor is a ratio of a quantity of slots included in the first measurement window to a quantity of slots included in the first time period.

For example, the first adjustment factor is a ratio of a quantity of symbols included in the first measurement window to a quantity of symbols included in the first time period.

For example, the first adjustment factor is a ratio of a time unit included in the first measurement window to a time unit included in the first time period. The time unit herein may be a slot, a symbol, a subslot, or a subframe. This is not limited herein.

It should be understood that the first time period may include the monitoring time unit that is used for partial sensing resource selection and that is in the first measurement window. It may be understood herein that the first time period includes a monitoring time unit that is used to perform partial sensing resource selection and that is in the first measurement window. The time unit may be a slot, a symbol, or a subslot. This is not limited herein.

For example, it is assumed that the first time period includes a slot 1 and a slot 2, and a frequency domain bandwidth is 10 subchannels. A quantity of subchannels corresponding to the first time period is a sum of a quantity of subchannels corresponding to a slot A and a quantity of subchannels corresponding to a slot B, that is, 20. It is assumed that five subchannels are occupied in the slot A. One subchannel is occupied in the slot B. It is assumed that the configured CBR measurement window includes four slots. An adjustment factor is 4/2=2. Therefore, CBR=(6*2)/(10*4)=0.3.

For example, the first adjustment factor is a ratio of first duration of the first measurement window to second duration of the first time period.

For example, the first adjustment factor is a ratio of third duration to fourth duration. The third duration is duration of a DRX cycle in the first measurement window. The fourth duration is duration of active time that is used for DRX and that is in the fourth duration.

It should be understood that the first duration, the second duration, the third duration, and the fourth duration each are a quantity of time units, or may be understood as a quantity of time-domain resources, or may be a quantity of symbols or a quantity of slots.

It should be understood that the first time period includes an active time period that is used for DRX and that is in the first measurement window. The active time period may be understood as active time or an active period. The terminal device monitors the SCI in the active period.

For example, the first adjustment factor is a ratio of a quantity of slots included in the first measurement window to a quantity of slots included in the first time period. Alternatively, the first adjustment factor is associated with at least one of a second preset period, a first quantity of times, a second quantity of times, a preset subcarrier spacing, and a fourth adjustment factor. It should be understood that the first quantity of times is an average quantity of retransmissions in the first measurement window, and the second quantity of times is a maximum quantity of resource reservation times. The average quantity of retransmissions is a result obtained after a sum of quantities of retransmissions of transport blocks transmitted in the first measurement window is divided by a quantity of periods of the transport blocks transmitted in the first measurement window, that is, an average quantity of retransmissions in one period in the first measurement window. A maximum quantity of reserved resources is a maximum quantity of transmission resources reserved for one transport block TB at a time. The maximum quantity of resource reservation times may be configured on the resource pool by the network device by using RRC, and may be 2 or 3. The average quantity of transmissions is a result, that is, an average quantity of transmissions in one period in the first measurement window, obtained after a sum of quantities of transmissions of the transport blocks transmitted in the first measurement window is divided by the quantity of periods of the transport blocks transmitted in the first measurement window. The average quantity of transmissions is equal to the average quantity of retransmissions plus one.

For example, the first adjustment factor is a ratio of a time unit included in the first measurement window to a time unit included in the first time period. The time unit herein may be a slot, a symbol, a subslot, or a subframe. This is not limited herein.

It should be understood that the first time period includes the non-sending time unit in the first measurement window, and the period in which the terminal device sends the service is the second preset period.

For example, there is an association relationship between the second preset period and the first adjustment factor. The first adjustment factor may be represented according to a formula $P/(P-1)$. P is the second preset period.

For example, there is an association relationship between the first adjustment factor and the second preset period and the quantity of retransmissions. The first adjustment factor may be represented according to a formula $P/(P-N)$. P is the second preset period, and N is the average quantity of transmissions.

For example, there is an association relationship between the first adjustment factor and the second preset period, the average quantity of transmissions, and the preset subcarrier spacing. The first adjustment factor may be represented according to a formula $2^\mu P/(2^\mu P\text{-}N)$. $\mu$ is the subcarrier spacing, P is the second preset period, and N is the average quantity of transmissions.

For example, there is an association relationship between the first adjustment factor and the second preset period, the average quantity of transmissions, and the fourth adjustment factor. The first adjustment factor may be represented according to a formula $P/(P\text{-}\beta*N)$. P is the second preset period, N is the average quantity of transmissions, and $\beta$ is the fourth adjustment factor.

For example, there is an association relationship between the first adjustment factor and the second preset period, the average quantity of transmissions, the preset subcarrier spacing, and the fourth adjustment factor. The first adjustment factor may be represented according to a formula $2^\mu \cdot P/(2^\mu \cdot P\text{-}\beta*N)$. $\mu$ is the subcarrier spacing, P is the second preset period, N is the average quantity of transmissions, and $\beta$ is the fourth adjustment factor.

For example, the CBR may be represented according to a formula $(C1/C2)/offset4$. C1 is a quantity of subchannels whose first measurement values are greater than or equal to the first threshold or the second threshold and that are in subchannels in the first time period. C2 is a quantity of subchannels in the first measurement window. offset4 is the first adjustment factor.

For example, the first adjustment factor is a ratio of a quantity of slots included in the first time period to a quantity of slots included in the first measurement window.

For example, the first adjustment factor is a ratio of a quantity of symbols included in the first time period to a quantity of symbols included in the first measurement window.

For example, the first adjustment factor is a ratio of a time unit included in the first time period to a time unit included in the first measurement window. The time unit herein may be a slot, a symbol, a subslot, or a subframe. This is not limited herein.

It should be understood that the first time period may include the monitoring time unit that is used for partial sensing resource selection and that is in the first measurement window. It may be understood herein that the first time period includes the monitoring time unit that is used to perform partial sensing resource selection and that is in the first measurement window. The time unit may be a slot, a symbol, or a subslot. This is not limited herein.

For example, it is assumed that the first time period includes a slot 1 and a slot 2, and a frequency domain bandwidth is 10 subchannels. A quantity of subchannels corresponding to the first time period is a sum of a quantity of subchannels corresponding to a slot A and a quantity of subchannels corresponding to a slot B, that is, 20. It is assumed that five subchannels are occupied in the slot A. One subchannel is occupied in the slot B. It is assumed that the configured CBR measurement window includes four slots. An adjustment factor is 2/4=0.5. Therefore, CBR=(6/40)/0.5=0.3.

For example, the first adjustment factor is a ratio of second duration of the first time period to first duration of the first measurement window.

For example, the first adjustment factor is a ratio of fifth duration to sixth duration. The sixth duration is duration of a DRX cycle in the first measurement window. The fifth duration is duration of active time that is used for DRX and that is in the sixth duration.

The first duration, the second duration, the fifth duration, and the sixth duration each are a quantity of time units, or may be understood as a quantity of time-domain resources, or may be a quantity of symbols or a quantity of slots.

It should be understood that the first time period includes an active time period that is used for DRX and that is in the first measurement window. The active time period may be understood as active time or an active period. The terminal device monitors the SCI in the active period.

For example, the first adjustment factor is a ratio of a quantity of slots included in the first time period to a quantity of slots included in the first measurement window. Alternatively, the first adjustment factor is associated with at least one of a second preset period, a first quantity of times, a second quantity of times, a preset subcarrier spacing, and a fourth adjustment factor. It should be understood that the first quantity of times is an average quantity of retransmissions in the first measurement window, and the second quantity of times is a maximum quantity of resource reservation times. The average quantity of retransmissions is a result obtained after a sum of quantities of retransmissions of transport blocks transmitted in the first measurement window is divided by a quantity of periods of the transport blocks transmitted in the first measurement window, that is, the average quantity of retransmissions in one period in the first measurement window divided by a maximum quantity of reserved resources. Alternatively, the average quantity of retransmissions is an integer multiple of a maximum quantity of reserved resources. The maximum quantity of reserved resources is a maximum quantity of transmission resources reserved for one transport block TB at a time. The maximum quantity of resource reservation times may be configured on the resource pool by the network device by using RRC, and may be 2 or 3. The average quantity of transmissions is a result, that is, an average quantity of transmissions in one period in the first measurement window, obtained after a sum of transmissions of the transport blocks transmitted in the first measurement window is divided by the quantity of periods of the transport blocks transmitted in the first measurement window. The average quantity of transmissions is equal to the average quantity of retransmissions plus one.

It should be understood that the first time period includes the non-sending time unit in the first measurement window, and the period in which the terminal device sends the service is the second preset period.

For example, there is an association relationship between the second preset period and the first adjustment factor. The first adjustment factor may be represented according to a formula $P/(P-1)$. P is the second preset period.

For example, there is an association relationship between the first adjustment factor and the second preset period and the quantity of retransmissions. The first adjustment factor may be represented according to a formula $P/(P-N)$. P is the second preset period, and N is the average quantity of transmissions.

For example, there is an association relationship between the first adjustment factor and the second preset period, the average quantity of transmissions, and the preset subcarrier spacing. The first adjustment factor may be represented according to a formula $(2^\mu P-N)/(2^\mu P)$. $\mu$ is the subcarrier spacing, P is the second preset period, and N is the average quantity of transmissions.

For example, there is an association relationship between the first adjustment factor and the second preset period, the average quantity of transmissions, and the fourth adjustment factor. The first adjustment factor may be represented according to a formula $(P-\beta*N)/P$. P is the second preset period, N is the average quantity of transmissions, and $\beta$ is the fourth adjustment factor.

For example, there is an association relationship between the first adjustment factor and the second preset period, the average quantity of transmissions, the preset subcarrier spacing, and the fourth adjustment factor. The first adjustment factor may be represented according to a formula $(2^\mu \cdot P-\beta*N)/(2^\mu \cdot P)$. $\mu$ is the subcarrier spacing, P is the second preset period, N is the average quantity of transmissions, and $\beta$ is the fourth adjustment factor.

For example, the first adjustment factor is a ratio of a time unit included in the first time period to a time unit included in the first measurement window. The time unit herein may be a slot, a symbol, a subslot, or a subframe. This is not limited herein.

In this solution provided in this application, because the terminal device cannot learn whether a subchannel on which RSSI or RSRP measurement is not performed is occupied, the measured CBR is less than or equal to the actual CBR. The CBR measured by the terminal device is proportionally adjusted by using an adjustment factor. This can more accurately indicate a channel congestion degree.

For example, the CBR may be represented according to a formula $(D1/D2)+offset5$. D1 is a quantity of subchannels whose first measurement values are greater than or equal to a first threshold or a second threshold and that are in subchannels in the first time period. D2 is a quantity of subchannels in the first measurement window. offsets is the first adjustment factor.

For example, the first adjustment factor may be associated with the ratio of the quantity of slots included in the first time period to the quantity of slots included in the first measurement window. In other words, a range [0, 1] is divided into a plurality of subranges, and one subrange corresponds to one adjustment factor. For example, if the range [0, 1] is divided into four subranges, and one subrange corresponds to one adjustment factor, the four subranges respectively correspond to four adjustment factors: A subrange 1 corresponds to an adjustment factor 1, a subrange 2 corresponds to an adjustment factor 2, a subrange 3 corresponds to an adjustment factor 3, and a subrange 4 corresponds to an adjustment factor 4. If the ratio of the quantity of slots included in the first time period to the quantity of slots included in the first measurement window falls within the subrange 1, the first adjustment factor is used to adjust the factor 1.

For example, the first adjustment factor may also be configured on the resource pool by using the RRC. It should be understood that, in an implementation, congestion control is disabled when the first adjustment factor is not configured.

For example, the first time period includes an active time period that is used for DRX and that is in the first measurement window, and/or a monitoring time unit that is used for partial sensing resource selection and that is in the first measurement window.

For example, the first adjustment factor may be associated with at least one of a fifth preset period, a third period set, a maximum quantity of reserved resources, and an average quantity of retransmissions. Meanings of the average quantity of transmissions and the average quantity of retransmissions are the same as those described above. Details are not described herein again. The average quantity of transmissions is equal to the average quantity of retransmissions plus one.

It should be understood that different third period sets are associated with different first adjustment factors.

For example, the period set {1, 2, ..., 9, 10} ms is associated with the adjustment factor 1, the period set {11, 12, ..., 19, 20} ms is associated with the adjustment factor 2, ..., the period set {91, 92, ..., 99, 100} ms is associated with an adjustment factor 10, and the period set {200, 300, ..., 1000} ms is associated with the adjustment factor 11.

It should be understood that different combinations of the third period sets and the maximum quantity of reserved resources are associated with different first adjustment factors.

For example, when Nmax=1, the period set {1, 2, ..., 9, 10} ms is associated with an adjustment factor 101, the period set {11, 12, ..., 19, 20} ms is associated with an adjustment factor 102, ..., the period set {91, 92, ..., 99, 100} ms is associated with an adjustment factor 110, and the period set {200, 300, ..., 1000} ms is associated with an adjustment factor 111. When Nmax=2, the period set {1, 2, ..., 9, 10} ms is associated with an adjustment factor 201, the period set {11, 12, ..., 19, 20} ms is associated with an adjustment factor 202, ..., the period set {91, 92, ... , 99, 100} ms is associated with an adjustment factor 210, and the period set {200, 300, ..., 1000} ms is associated with an adjustment factor 211. When Nmax=3, the period set {1, 2, ..., 9, 10} ms is associated with an adjustment factor 301, the period set {11, 12, ..., 19, 20} ms is associated with an adjustment factor 302, ..., the period set {91, 92, ..., 99, 100} ms is associated with an adjustment factor 310, and the period set {200, 300, ..., 1000} ms is associated with an adjustment factor 311. Nmax is the maximum quantity of reserved resources.

It should be understood that different combinations of the third period sets and a preset set of maximum quantities of transmissions set are associated with different first adjustment factors. For example, MaxTransNum=10 indicates that one TB is transmitted for a maximum of 10 times, or one TB is retransmitted for a maximum of nine times.

For example, the preset set of maximum quantities of transmissions is MaxTransNum. When MaxTransNum={1, 2, ..., 10}, the period set {1, 2, ..., 9, 10} ms is associated with the adjustment factor 101, the period set {11, 12, ..., 19, 20} ms is associated with the adjustment factor 102, ..., the period set {91, 92, ..., 99, 100} ms is associated with the adjustment factor 110, and the period set {200, 300, ..., 1000} ms is associated with the adjustment factor 111. When MaxTransNum=={ 11, 12, ..., 20}, the period set {1, 2, ..., 9, 10} ms is associated with the adjustment factor 201, the period set {11, 12, ..., 19, 20} ms is associated with the adjustment factor 202, ..., the period set {91, 92, ..., 99, 100} ms is associated with the adjustment factor 210, and the period set {200, 300, ..., 1000} ms is associated with the adjustment factor 211. When MaxTransNum=={11, 12, ..., 32}, the period set {1, 2, ..., 9, 10} ms is associated with the adjustment factor 301, the period set {11, 12, ..., 19, 20} ms is associated with the adjustment factor 302, ..., the period set {91, 92, ..., 99, 100} ms is associated with the adjustment factor 310, and the period set {200, 300, ..., 1000} ms is associated with the adjustment factor 311.

It should be understood that different combinations of different sets of average quantities of transmissions are associated with different first adjustment factors. For example, average quantity of transmissions=10 indicates that a quantity of actual transmissions of a terminal in the measurement window is 10, or an actual transmission of the terminal in the first measurement window occupies 10 slots.

For example, the preset set of maximum quantities of transmissions is TransNum. offseta is associated when TransNum={ 1, 2, ..., 10}, offsetb is associated when TransNum={11, 12, ..., 10}, offseta is associated when TransNum={91, 92, ..., 100}, and offsetj is associated when TransNum={11, 12, ..., 10}.

It should be understood that different fifth preset periods are associated with different first adjustment factors.

For example, the first time period includes a non-sending slot in the first measurement window, and a period in which a terminal device sends a service is a fifth preset period. The fifth preset period falls within the third period set.

Because RSSI or RSRP measurement is performed only in a part of slots and/or symbols, and RSSI or RSRP measurement is not performed in another part of slots and/or symbols, an occupation status of a subchannel on which RSSI or RSRP measurement is not performed cannot be learned of. As a result, a measured CBR is less than or equal to an actual CBR. Therefore, an adjustment factor can compensate for a small measured CBR.

FIG. 10 is a schematic flowchart of a channel congestion parameter determining method according to an embodiment of this application. The method may include the following steps.

S1001: Determine a first measurement window based on a first slot and first preset duration.

The first measurement window is a CR measurement window. The CR measurement window is used to perform CR measurement. The CR measurement window herein may be replaced with a CR evaluation window, and the CR measurement may be replaced with CR evaluation.

The first preset duration is configured by using a higher layer parameter, may be 1000 slots, may be 1000 ms, or may be other duration. The first preset duration may be understood as a quantity, a value, or a parameter.

The first slot is indicated by a physical slot index. The first slot may be a current slot. Alternatively, it may be understood that the first slot is a CR measurement slot. Alternatively, it may be understood that the first slot is a slot for triggering CR measurement. Alternatively, it may be understood that an index of the first slot is a physical slot index. The physical slot index is an index of a slot set in a resource pool and an index of a slot set outside the resource pool. The resource pool is a set of time-frequency resources used for sidelink transmission. The index of the slot set in the resource pool is a logical slot index. A slot index of the CR measurement window herein may be a physical slot index or a logical slot index.

For example, the first measurement window is determined based on the first slot and the first preset duration. In other words, after the index of the first slot is determined, the first measurement window is established based on a time unit in which a sum of duration before the first slot is second preset duration, and a time unit in which the first slot is used as a start slot and a sum of duration after the first slot is third preset duration. A sum of the second preset duration and the third preset duration plus 1 is equal to the first preset duration. Therefore, duration of the first measurement window is the first preset duration.

For example, if a terminal device performs CR evaluation in a slot n, the first slot is n, the first preset duration is a+b+1, and the first measurement window is [n-a, n+b]. a and b are integers. The first preset duration is associated with a subcarrier spacing. The first preset duration may be different in different subcarrier spacings.

It should be understood that the second preset duration and the third preset duration meet a condition $b<(a+b+1)/2$, a is the second preset duration, b is the third preset duration, and n+b should not exceed a last transmission slot of current transmission. The last transmission slot of current transmission is a slot in which a last transmission resource indicated in SCI of the current transmission is located.

For example, determining the first measurement window based on the first slot and the first preset duration may alternatively be understood as that duration for actual receiving, actual sensing, or actual measurement is the first preset duration. In this case, the first measurement window changes with the duration for actual receiving, actual sensing, or actual measurement.

S1002: Determine a CR based on a first time period.

For example, the first time period is a to-be-monitored slot in the first measurement window. It may be understood or replaced with that the first time period is a set of monitoring slots for a sensing resource selection manner or a partial sensing resource selection manner in the first measurement window. The set of monitoring slots may be a set of nonconsecutive slots.

For example, the first time period includes at least one of the following: a to-be-monitored time unit that is used for partial sensing resource selection and that is in the first measurement window, an active time unit that is used for DRX and that is in the first measurement window, and a time unit that is used for sidelink transmission and that is in the first measurement window. For example, the first time period may be an active time unit that is used for DRX and that is in the first measurement window. The time unit may be understood as a slot or a symbol, or includes the slot and the symbol. This is not limited herein.

It should be understood that the time unit included in the first time period includes a time unit before the first time slot and/or a time unit after the first time slot.

For example, the CR may be represented according to a formula (E1/E2). E1 is a sum of a quantity of occupied subchannels in subchannels in the first time period and a quantity of subchannels that are reserved to be occupied and that are in the subchannels in the first time period. E2 is a quantity of subchannels in the first measurement window.

It should be understood that the quantity of occupied subchannels is a quantity of used subchannels in the CR assessment window, and the used subchannels may be understood as being included in a resource indicated by sent SCI.

For example, a terminal device performs CR evaluation in the time-frequency resource set in the first time period. It may be understood that the CR evaluation is performed in the time-frequency resource set included in the first time period.

It should be understood that the subchannel reserved to be occupied is indicated by SCI. The terminal device sends the SCI before the first slot, and the SCI indicates a resource reserved to be occupied. The resource reserved to be occupied herein may be understood as a resource indicated by the SCI, or a resource scheduled by the SCI, or a reserved resource indicated in the SCI. The subchannel reserved to be occupied may be understood as a subchannel reserved to be used or a reserved subchannel, and the reserved subchannel may be understood as being included in a resource indicated by the sent SCI in the CR evaluation window.

For example, the first CBR is obtained after the CR is determined. A third CBR range associated with the first CBR is determined. A fifth upper limit or a sixth upper limit is determined based on the third CBR range and a third priority value. When a PSSCH is sent, a condition needs to be met: The CR is less than or equal to a fourth upper limit or the fifth upper limit. It may be understood that the PSSCH is sent when the CR is less than or equal to the fourth upper limit or the fifth upper limit.

It should be understood that both the fourth upper limit and the fifth upper limit are CR upper limits.

It should be understood that there is an association relationship between the third CBR range and the third priority value and the fourth upper limit.

For example, the terminal device obtains the fourth upper limit or the fifth upper limit, the terminal device in an energy-saving mode uses the fourth upper limit, and the terminal device in a non-energy-saving mode uses the fifth upper limit. Being in the energy-saving mode may be understood as being in a DRX mode or using the partial sensing resource selection manner or using a randomly selected resource selection manner. Being in the non-energy-saving mode may be understood as being in a non-DRX mode or using a full sensing resource selection manner.

For example, the fourth upper limit is associated with partial sensing resource selection, and the fifth upper limit is associated with full sensing resource selection. Alternatively, the fourth upper limit is associated with DRX, and the fifth upper limit is associated with non-DRX.

It should be understood that different levels of energy-saving modes in which the terminal devices are located may respectively correspond to different CR upper limits. There may be one or more CR upper limits.

For example, the fourth upper limit or the fifth upper limit is configured on the resource pool by using RRC. Optionally, the fourth upper limit is less than the fifth upper limit.

For example, the first time period includes an active time unit that is used for DRX and that is in the first measurement window, and/or the first time period includes a to-be-monitored time unit that is used for partial sensing resource selection and that is in the first measurement window.

It should be understood that, when the fourth upper limit is not configured, the fifth upper limit is used, or congestion control is disabled. Disabling congestion control is not performing CR measurement and/or reporting.

For example, the fourth upper limit is configured on the resource pool by using RRC. Alternatively, the fourth upper limit is associated with a sixth preset period. Alternatively, the fourth upper limit is associated with a period set that includes a sixth preset period. Alternatively, the fourth upper limit is associated with the third priority value. Alternatively, the fourth upper limit is associated with a third priority value set that includes the third priority value.

For example, the first time period includes a non-sending time unit in the first measurement window, and a period in which a terminal device sends a service is a fourth preset period.

It should be understood that different sixth preset periods correspond to different fourth upper limits, a smaller sixth preset period indicates a smaller fourth upper limit, and different period sets associated with the sixth preset period correspond to different fourth upper limits.

It should be understood that different third priority value sets are associated with different fourth upper limits, priority values are classified into 1 to 8 levels, and a smaller third priority value indicates a higher priority. Therefore, different third priority values correspond to different fourth upper limits, a smaller third priority value is associated with a larger fourth upper limit and more to-be-sent data packets.

It should be understood that the first CBR is preset, or is determined by using the foregoing steps 901 and 902.

Because the terminal device can learn of only an RSSI or RSRP measurement value of a part of slots when configured with partial sensing resource selection and/or DRX, a measured CBR value is less than or equal to a real CBR value, and a CR upper limit corresponding to a CBR range of the measured CBR remains unchanged or increases, which is unfair to a terminal device for non-partial sensing resource selection and/or non-DRX. A plurality of CR upper limits are set, so that a CR upper limit obtained by a terminal device for partial sensing resource selection and/or DRX is close to a real CR upper limit. This ensures fairness of data transmission.

For example, after the CR is determined, a second CBR is obtained, a fourth CBR range associated with the second CBR is determined, and a sixth upper limit is determined based on the fourth CBR range, a fourth priority value, and a fifth adjustment factor. A PSSCH is sent when the CR is less than or equal to the sixth upper limit.

For example, the sixth upper limit may be represented according to a formula (L21*offset6). L21 is an upper limit associated with the fourth CBR range and the fourth priority value, and offset6 is the fifth adjustment factor.

offset6 may be configured on the resource pool. offset6 may be configured by a network device by using RRC.

For example, the sixth upper limit may be represented according to a formula (L22-offset7). L22 is an upper limit associated with the fourth CBR range and the fourth priority value, and offset7 is the fifth adjustment factor.

offset7 may be configured on the resource pool. offset 7 may be configured by a network device by using RRC.

It should be understood that the fifth adjustment factor may be 0, may be 1, or may be a number from 0 to 1. Alternatively, a value of offset6 ranges from 0.5 to 1. A value of offset7 ranges from 0 to 0.5.

For example, the first time period includes an active time unit that is used for DRX and that is in the first measurement window, and/or a to-be-monitored time unit that is used for partial sensing resource selection and that is in the first measurement window.

For example, the fifth adjustment factor is configured on the resource pool by using RRC. Alternatively, the fifth adjustment factor is associated with the fourth priority value.

For example, the first time period includes a non-sending time unit in the first measurement window, and a period in which a terminal device sends a service is a seventh preset period.

For example, the fifth adjustment factor is associated with the seventh preset period. Alternatively, the fifth adjustment factor is associated with the fourth period set, and the fourth period set includes a seventh preset period. Alternatively, the fifth adjustment factor is associated with the fourth priority value. Alternatively, the fifth adjustment factor is associated with a fourth priority value set, and the fourth priority value set includes the fourth priority value.

It should be understood that different fourth priority values correspond to different fifth adjustment factors. Because different priority values correspond to different adjustment factors, and priority values are classified into 1 to 8 levels, each priority value may correspond to one adjustment factor, or a plurality of priority values may correspond to one adjustment factor. A smaller priority value indicates a higher priority, a larger adjustment factor, a larger CR upper limit, and more to-be sent data packets.

It should be understood that a smaller seventh preset period indicates a smaller fifth adjustment factor, different fourth period sets are associated with different fifth adjustment factors, and different priority value sets are associated with different adjustment factors.

In this solution provided in this application, because the terminal device can learn of only an RSSI or RSRP measurement value of a part of slots when configured with partial sensing resource selection and/or DRX, a measured CBR value is less than or equal to a real CBR value, and a CR upper limit corresponding to a CBR range of the measured CBR remains unchanged or increases, which is unfair to a terminal device for non-partial sensing resource selection and/or non-DRX. Therefore, adjusting the CR upper limit helps ensure fairness of data transmission.

For example, the CR may be represented according to a formula F1/F2. F1 is a sum of a quantity of occupied subchannels in subchannels in the first time period and a quantity of subchannels that are reserved to be occupied and that are in the subchannels in the first time period. F2 is a quantity of subchannels in the first time period.

It should be understood that the quantity of occupied subchannels is a quantity of used subchannels in the CR assessment window, and the used subchannels may be understood as being included in a resource indicated by the sent SCI.

For example, a terminal device performs CR evaluation in the time-frequency resource set in the first time period. It may be understood that the CR evaluation is performed in the time-frequency resource set included in the first time period.

In this solution provided in this application, only in a future available slot range, or a slot range in which RSSI or RSRP measurement is actually performed, receiving is actually performed, or measurement is actually performed, a proportion of a subchannel that is reserved to be used and a used subchannel to all subchannels is calculated. This helps really reflect resource usage of the terminal device, to better regulate congestion control.

For example, the CR may be represented according to a formula (G1+G2)*offset8. G1 is a sum of a quantity of occupied subchannels in subchannels in the first time period and a quantity of subchannels that are reserved to be occupied and that are in the subchannels in the first time period. G2 is a quantity of subchannels in the first measurement window. offsets is the second adjustment factor.

It should be understood that the quantity of occupied subchannels is a quantity of used subchannels in the CR assessment window, and the used subchannels may be understood as being included in a resource indicated by sent SCI.

It should be understood that the second adjustment factor is a number from 0 to 1.

It should be understood that the second adjustment factor may be configured on the resource pool, and is configured by a network device by using RRC.

For example, the second adjustment factor is a second value, and the second value is a ratio of a quantity of slots included in the first measurement window to a quantity of slots included in the first time period. Alternatively, the second adjustment factor is associated with the second value. Alternatively, the second adjustment factor is configured on the resource pool by using the RRC. It should be understood that a larger second value indicates a smaller second adjustment factor.

For example, the second adjustment factor is a ratio of a quantity of slots included in the first time period to a quantity of slots included in the first measurement window.

That the second adjustment factor is associated with the ratio may be understood as that the second adjustment factor is associated with a subrange divided in a range [0, 1], and the associated second adjustment factor is determined based on a subrange of the ratio.

For example, the CR may be represented according to a formula (H1/H2)+offset9. H1 is a sum of a quantity of occupied subchannels in subchannels in the first time period and a quantity of subchannels that are reserved to be occupied and that are in the subchannels in the first time period. H2 is a quantity of subchannels in the first measurement window. offset9 is the second adjustment factor.

It should be understood that the quantity of occupied subchannels is a quantity of used subchannels in the CR assessment window, and the used subchannels may be understood as being included in a resource indicated by sent SCI.

It may be understood that offset9 is a decimal, and is configured on the resource pool by using the RRC.

For example, the first time period includes an actual monitoring time unit in the first measurement window, or a non-sending time unit in the first measurement window.

For example, the first time period includes a to-be-monitored time unit that is used for partial sensing resource selection and that is in the first measurement window. It may be understood that the first time period includes a monitoring time unit that is used for a partial sensing resource selection manner and that is in the first measurement window. Alternatively, the first time period includes a candidate time unit and a monitoring time unit that is used for a partial perception resource selection manner and that is in the first measurement window. Alternatively, the first time period includes a configured monitoring time unit in the first measurement window.

For example, after the CR is determined, a third CBR is obtained, a fifth CBR range associated with the third CBR is determined, and a seventh upper limit is determined based on the fifth CBR range and a fifth priority value. A PSSCH is sent when the CR is less than or equal to the seventh upper limit.

In this solution provided in this application, it is assumed that a proportion of a used subchannel and a to-be-used subchannel to subchannels on which RSSI or RSRP measurement is not performed is associated with a proportion of a used subchannel and a to-be-used subchannel to subchannels on which RSSI or RSRP measurement is performed. The actually measured CBR is adjusted. This can more accurately indicate a channel congestion degree. In addition, there are various methods for determining an adjustment factor. This helps improve an application scope of the terminal device.

Based on a same concept as the channel congestion parameter determining method in the foregoing embodiments, as shown in FIG. 11, an embodiment of this application further provides a channel congestion parameter determining apparatus 1100. The communication apparatus may be used in the channel congestion parameter determining methods shown in FIG. 9 and/or FIG. 10. The communication apparatus 1100 may be the terminal device 200 shown in FIG. 4, or may be a component (for example, a chip) used in the terminal device 200. The channel congestion parameter determining apparatus 1000 includes:

a processing unit 1110, configured to determine a first measurement window based on a first slot and first preset duration.

The processing unit 1110 is further configured to determine a channel busy ratio CBR or a channel occupancy ratio CR based on a first time period. The first time period is a time unit in the first measurement window.

For more detailed description of the processing unit 1110, directly refer to the related descriptions of the terminal device in the method embodiments shown in FIG. 9 and/or FIG. 10. Details are not described herein again.

Some or all of the foregoing channel congestion parameter determining methods may be implemented by hardware, or may be implemented by software.

Optionally, the channel congestion parameter determining apparatus may be a chip or an integrated circuit during specific implementation.

Optionally, when some or all of the channel congestion parameter determining methods in the foregoing embodiments are implemented by software, the channel congestion parameter determining apparatus includes: a memory, configured to store a program; and a processor, configured to execute the program stored in the memory. When the program is executed, the channel congestion parameter determining apparatus may implement the channel congestion parameter determining methods provided in the foregoing embodiments.

Optionally, the memory may be a physically independent unit, or may be integrated with the processor.

Optionally, when some or all of the channel congestion parameter determining methods in the foregoing embodiments are implemented by software, the channel congestion parameter determining apparatus may also include only a processor. A memory configured to store a program is located outside the channel congestion parameter determining apparatus. The processor is connected to the memory by using a circuit/wire, and is configured to read and execute the program stored in the memory.

The processor may be a central processing unit (central processing unit, CPU), a network processor (network processor, NP), or a combination of the CPU and the NP.

The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The memory may include a volatile memory (volatile memory), for example, a random access memory (random-access memory, RAM). The memory may alternatively include a non-volatile memory (non-volatile memory), for example, a flash memory (flash memory), a hard disk drive (hard disk drive, HDD), or a solid-state drive (solid-state drive, SSD). The memory may alternatively include a combination of the foregoing types of memories.

The terminal device provided in this embodiment is configured to perform the foregoing channel congestion parameter determining method, and therefore can achieve the same effect as the foregoing implementation methods.

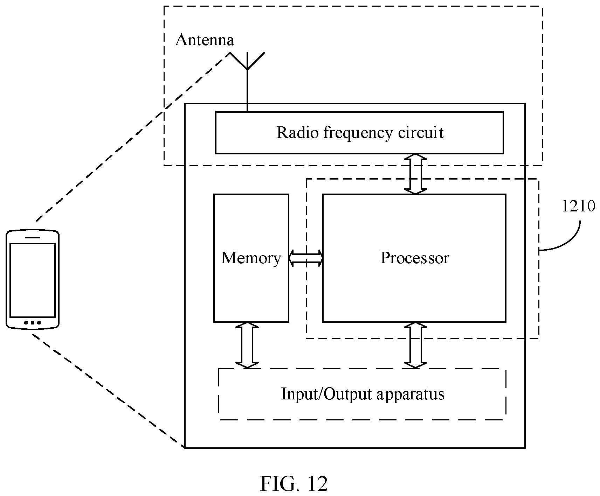

FIG. 12 is a simplified schematic diagram of a structure of a terminal device. For ease of understanding and illustration, an example in which the terminal device is a mobile phone is used in FIG. 11. As shown in FIG. 12, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 12 shows one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, a processor having a processing function is considered as a processing unit of the terminal device. As shown in FIG. 11, the terminal device includes a processing unit 1210. The processing unit 1210 may also be referred to as a processor, a processing board, a processing module, a processing apparatus, or the like.

For example, in an embodiment, the processing unit 1210 is configured to perform functions in the steps S901 and S902 in the embodiment shown in FIG. 9, and/or the steps S1001 and S1002 in the embodiment shown in FIG. 10.

It may be clearly understood by a person skilled in the art that, for ease and brevity of description, for a detailed working process of foregoing systems, apparatuses, and units, refer to a corresponding process in the foregoing method embodiments. Details are not described herein again.

In the several embodiments provided in this application, it should be understood that the disclosed system, apparatus, and method may be implemented in another manner. For example, division into the units is merely logical function division and may be another division during actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate. Parts displayed as units may or may not be physical units, in other words, may be located in one position, or may be distributed on a plurality of network units. Some or all of the units may be selected based on an actual requirement to achieve the objectives of the solutions of embodiments.

All or some of the foregoing embodiments may be implemented by software, hardware, firmware, or any combination thereof. When the software is used for implementation, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center that integrates one or more usable media. The usable medium may be a read-only memory (read-only memory, ROM), a random access memory (random access memory, RAM), or a magnetic medium, for example, a floppy disk, a hard disk, a magnetic tape, or a magnetic disk, or an optical medium, for example, a digital versatile disc (digital versatile disc, DVD), or a semiconductor medium, for example, a solid state disk (solid state disk, SSD).

## Claims

1. A channel congestion parameter determining method, comprising:

   determining a first measurement window based on a first slot and first preset duration; and
   determining a channel busy ratio CBR or a channel occupancy ratio CR based on a first time period, wherein the first time period is a time unit in the first measurement window.

2. The method according to claim 1, wherein the first time period is a receiving time unit in the first measurement window.

3. The method according to claim 1, wherein the first time period comprises at least one of the following:

   an active time period that is used for discontinuous reception DRX and that is in the first measurement window;
   a monitoring time unit that is used for partial sensing resource selection and that is in the first measurement window;
   a non-sending time unit in the first measurement window; and
   a time unit that is used for sidelink transmission and that is in the first measurement window.

4. The method according to claim 2 or 3, wherein the determining a CBR based on a first time period comprises:
   determining the CBR based on a first quantity, wherein the first quantity is a quantity of subchannels whose first measurement values are greater than or equal to a first threshold or a second threshold and that are in subchannels in the first time period, and the first measurement value is an RSSI measurement value or an RSRP measurement value.

5. The method according to claim 4, wherein the determining the CBR based on a first quantity comprises: determining the CBR based on the first quantity and a second quantity, wherein the second quantity is a quantity of subchannels in the first measurement window.

6. The method according to claim 4, wherein the determining the CBR based on a first quantity comprises: determining the CBR based on the first quantity and a third quantity, wherein the third quantity is a quantity of subchannels in the first time period.

7. The method according to claim 5, wherein the determining the CBR based on a first quantity comprises: determining the CBR based on the first quantity, the second quantity, and a first adjustment factor.

8. The method according to claim 5, wherein the first threshold is a threshold used by a terminal device in an energy-saving mode, and the second threshold is a threshold used by the terminal device in a non-energy-saving mode.

9. The method according to claim 5, wherein the first threshold is associated with partial sensing resource selection and the second threshold is associated with full sensing resource selection.

10. The method according to claim 5, wherein the first threshold is associated with DRX, and the second threshold is associated with non-DRX.

11. The method according to any one of claims 8 to 10, wherein both the first threshold and the second threshold are configured on a resource pool by using radio resource control RRC;

    the second threshold is used when the first threshold is not configured, wherein the second threshold is greater than the first threshold; or congestion control is disabled.

12. The method according to claim 5, wherein the first threshold is associated with a first preset period; or the first threshold is associated with a first period set.

13. The method according to claim 7, wherein the first adjustment factor is a ratio of a quantity of slots comprised in the first measurement window to a quantity of slots comprised in the first time period.

14. The method according to claim 7, wherein the first adjustment factor is a first value, and the first value is a ratio of first duration of the first measurement window to second duration of the first time period.

15. The method according to claim 14, wherein the first time period comprises the active time period that is used for DRX and that is in the first measurement window.

16. The method according to claim 7, wherein the first adjustment factor is a ratio of a quantity of slots comprised in the first measurement window to a quantity of slots comprised in the first time period; or
the first adjustment factor is associated with at least one of a second preset period, a first quantity of times, a second quantity of times, and a preset subcarrier spacing.

17. The method according to claim 1, wherein the first time period comprises a to-be-monitored slot in the first measurement window.

18. The method according to claim 1, wherein the first time period comprises at least one of the following:

a to-be-monitored time unit that is used for partial sensing resource selection and that is in the first measurement window;
a to-be-monitored active time unit that is used for DRX and that is in the first measurement window; and
a time unit that is used for sidelink transmission and that is in the first measurement window.

19. The method according to claim 17 or 18, wherein the determining a CR based on a first time period comprises:
determining the CR based on a fourth quantity, wherein the fourth quantity is a sum of a quantity of occupied subchannels in subchannels in the first time period and a quantity of subchannels that are reserved to be occupied and that are in the subchannels in the first time period.

20. The method according to claim 19, wherein the determining the CR based on a fourth quantity comprises:
determining the CR based on the fourth quantity and a fifth quantity, wherein the fifth quantity is a quantity of subchannels in the first measurement window.

21. The method according to claim 19, wherein the determining the CR based on a fourth quantity comprises:
determining the CR based on the fourth quantity and a sixth quantity, wherein the sixth quantity is a quantity of subchannels in the first time period.

22. The method according to claim 19, wherein the determining the CR based on a fourth quantity comprises:
determining the CR based on the fourth quantity, a seventh quantity, and a second adjustment factor, wherein the seventh quantity is a quantity of subchannels in the first measurement window.

23. The method according to claim 22, wherein the second adjustment factor is a second value, the second value is a ratio of an eighth quantity to the fourth quantity, and the eighth quantity is a quantity of slots comprised in the first measurement window;

the second adjustment factor is associated with a second value; or
the second adjustment factor is configured on a resource pool by using RRC.

24. The method according to any one of claims 21 to 23, wherein the first time period comprises the to-be-monitored time unit that is used for partial sensing resource selection and that is in the first measurement window.

25. A channel congestion parameter determining apparatus, comprising:

determining a first measurement window based on a first slot and first preset duration; and
determining a channel busy ratio CBR or a channel occupancy ratio CR based on a first time period, wherein the first time period is a time unit in the first measurement window.

26. The apparatus according to claim 25, wherein the first time period is a receiving time unit in the first measurement window.

27. The apparatus according to claim 25, wherein the first time period comprises at least one of the following:

an active time period that is used for discontinuous reception DRX and that is in the first measurement window;
a monitoring time unit that is used for partial sensing resource selection and that is in the first measurement window;
a non-sending time unit in the first measurement window; and
a time unit that is used for sidelink transmission and that is in the first measurement window.

28. The apparatus according to claim 26 or 27, wherein the determining a CBR based on a first time period comprises:
determining the CBR based on a first quantity, wherein the first quantity is a quantity of subchannels whose first measurement values are greater than or equal to a first threshold or a second threshold and that are in subchannels in the first time period, and the first measurement value is an RSSI measurement value or an RSRP measurement value.

29. The apparatus according to claim 28, wherein the determining the CBR based on a first quantity comprises:
determining the CBR based on the first quantity and a second quantity, wherein the second quantity is a quantity of subchannels in the first measurement window.

30. The apparatus according to claim 28, wherein the determining the CBR based on a first quantity comprises:
determining the CBR based on the first quantity and a third quantity, wherein the third quantity is a quantity of subchannels in the first time period.

31. The apparatus according to claim 28, wherein the determining the CBR based on a first quantity comprises:
determining the CBR based on the first quantity, the second quantity, and a first adjustment factor.

32. The apparatus according to claim 29, wherein the first threshold is a threshold used by a terminal device in an energy-saving mode, and the second threshold is a threshold used by the terminal device in a non-energy-saving mode.

33. The apparatus according to claim 29, wherein the first threshold is associated with partial sensing resource selection and the second threshold is associated with full sensing resource selection.

34. The apparatus according to claim 29, wherein the first threshold is associated with DRX, and the second threshold is associated with non-DRX.

35. The apparatus according to any one of claims 32 to 34, wherein both the first threshold and the second threshold are configured on a resource pool by using radio resource control RRC;

the second threshold is used when the first threshold is not configured, wherein the second threshold is greater than the first threshold; or congestion control is disabled.

36. The apparatus according to claim 29, wherein the first threshold is associated with a first preset period; or the first threshold is associated with a first period set.

37. The apparatus according to claim 31, wherein the first adjustment factor is a ratio of a quantity of slots comprised in the first measurement window to a quantity of slots comprised in the first time period.

38. The apparatus according to claim 31, wherein the first adjustment factor is a first value, and the first value is a ratio of first duration of the first measurement window to second duration of the first time period.

39. The apparatus according to claim 38, wherein the first time period comprises the active time period that is used for DRX and that is in the first measurement window.

40. The apparatus according to claim 31, wherein the first adjustment factor is a ratio of a quantity of slots comprised in the first measurement window to a quantity of slots comprised in the first time period; or the first adjustment factor is associated with at least one of a second preset period, a first quantity of times, a second quantity of times, and a preset subcarrier spacing.

41. The apparatus according to claim 25, wherein the first time period comprises a to-be-monitored slot in the first measurement window.

42. The apparatus according to claim 25, wherein the first time period comprises at least one of the following:

a to-be-monitored time unit that is used for partial sensing resource selection and that is in the first measurement window;
a to-be-monitored active time unit that is used for DRX and that is in the first measurement window; and
a time unit that is used for sidelink transmission and that is in the first measurement window.

43. The apparatus according to claim 41 or 42, wherein the determining a CR based on a first time period comprises:
determining the CR based on a fourth quantity, wherein the fourth quantity is a sum of a quantity of occupied subchannels in subchannels in the first time period and a quantity of subchannels that are reserved to be occupied and that are in the subchannels in the first time period.

44. The apparatus according to claim 43, wherein the determining the CR based on a fourth quantity comprises:
determining the CR based on the fourth quantity and a fifth quantity, wherein the fifth quantity is a quantity of subchannels in the first measurement window.

**45.** The apparatus according to claim 43, wherein the determining the CR based on a fourth quantity comprises:
determining the CR based on the fourth quantity and a sixth quantity, wherein the sixth quantity is a quantity of subchannels in the first time period.

**46.** The apparatus according to claim 43, wherein the determining the CR based on a fourth quantity comprises:
determining the CR based on the fourth quantity, a seventh quantity, and a second adjustment factor, wherein the seventh quantity is a quantity of subchannels in the first measurement window.

**47.** The apparatus according to claim 46, wherein the second adjustment factor is a second value, the second value is a ratio of an eighth quantity to the fourth quantity, and the eighth quantity is a quantity of slots comprised in the first measurement window;

the second adjustment factor is associated with a second value; or
the second adjustment factor is configured on a resource pool by using RRC.

**48.** The apparatus according to any one of claims 45 to 47, wherein the first time period comprises the to-be-monitored time unit that is used for partial sensing resource selection and that is in the first measurement window.

**49.** A communication apparatus, comprising a processor and a transceiver apparatus, wherein the processor is coupled to the transceiver apparatus, and the processor is configured to execute a computer program or instructions, to control the transceiver apparatus to receive and send information; and when the processor executes the computer program or the instructions, the processor is further configured to implement the method according to any one of claims 1 to 24.

**50.** A computer-readable storage medium, wherein the computer-readable storage medium stores a computer program or instructions, and when the computer program or the instructions are executed, the method according to any one of claims 1 to 24 is implemented.

**Amended claims under Art. 19.1 PCT**

**1.** A channel congestion parameter determining method, comprising:

determining a channel busy ratio CBR measurement window, wherein the CBR measurement window is used for CBR measurement; and
determining a CBR based on a first time period, wherein the first time period is an active time unit that is used for discontinuous reception DRX and that is in the CBR measurement window and/or a monitoring time unit that is used for partial sensing resource selection and that in the CBR measurement window.

**2.** The method according to claim 1, wherein
the method is performed by a terminal device, and the terminal device is configured with partial sensing resource selection and/or discontinuous reception DRX.

**3.** The method according to claim 1 or 2, wherein
the CBR is a proportion of a subchannel whose sidelink received signal strength indicator SL RSSI measurement value exceeds a threshold in a resource pool in the first time period.

**4.** The method according to claim 3, wherein the proportion is a proportion of the subchannel whose SL RSSI measurement value exceeds the threshold in the first time period to subchannels in the first time period.

**5.** The method according to any one of claims 1 to 4, wherein the first time period is one or more slots in the CBR measurement window.

**6.** The method according to any one of claims 1 to 5, wherein
the CBR measurement window is determined based on a first slot and first preset duration, wherein the first slot is a slot in which the CBR measurement is performed, and the first preset duration is configured by using a higher layer parameter.

**7.** A channel congestion parameter determining apparatus, comprising:

a processing module, configured to determine a channel busy ratio CBR measurement window, wherein the CBR measurement window is used for CBR measurement; and
the processing module is further configured to determine a CBR based on a first time period, wherein the first time period is an active time unit that is used for discontinuous reception DRX and that is in the CBR measurement window and/or a monitoring time unit that is used for partial sensing resource selection and that is in the CBR measurement window.

**8.** The apparatus according to claim 7, wherein
the apparatus is configured with partial sensing resource selection and/or discontinuous reception DRX.

9. The apparatus according to claim 7 or 8, wherein the CBR is a proportion of a subchannel whose sidelink received signal strength indicator SL RSSI measurement value exceeds a threshold in a resource pool in the first time period.

10. The apparatus according to claim 9, wherein the proportion is a proportion of the subchannel whose SL RSSI measurement value exceeds the threshold in the first time period to subchannels in the first time period.

11. The apparatus according to any one of claims 7 to 10, wherein the first time period is one or more slots in the CBR measurement window.

12. The apparatus according to any one of claims 7 to 11, wherein
the CBR measurement window is determined based on a first slot and first preset duration, wherein the first slot is a slot in which the CBR measurement is performed, and the first preset duration is configured by using a higher layer parameter.

13. A communication apparatus, comprising a processor, wherein when the processor executes a computer program or instructions stored in a memory, the processor is configured to implement the method according to any one of claims 1 to 6.

14. A computer-readable storage medium, wherein the computer-readable storage medium stores a computer program or instructions, and when the computer program or the instructions are executed, the method according to any one of claims 1 to 6 is implemented.

15. A computer program product, wherein the computer program product stores a computer program or instructions, and when the computer program or the instructions are executed, the method according to any one of claims 1 to 6 is implemented.

Terminal
device 200

Terminal
device 200

Network device 100

Terminal
device 200

FIG. 1

One
subchannel

Occupied
subchannel

Slot n–a

Slot n–1 Slot n

CBR measurement window

FIG. 2

A terminal
monitors a
physical downlink
control channel

Active time

Inactive time

DRX cycle

FIG. 3

FIG. 4

EP 4 221 385 A1

FIG. 5

FIG. 6

FIG. 7

Slot 3                    Slot 8

One
subchannel

Occupied
subchannel

Slot n–a                                          Slot n–1  Slot n
CBR measurement window

FIG. 8

| Determine a first measurement window based on a first slot and first preset duration | S901 |

| Determine a channel busy ratio CBR based on a first time period, where the first time period is a time unit in the first measurement window | S902 |

FIG. 9

| Determine a first measurement window based on a first slot and first preset duration | S1001 |

| Determine a channel occupancy ratio CR based on a first time period, where the first time period is a time unit in the first measurement window | S1002 |

FIG. 10

1100

Channel congestion control parameter
determining apparatus

1110

Processing unit

FIG. 11

Antenna

Radio frequency circuit

Memory

Processor

1210

Input/Output apparatus

FIG. 12

## INTERNATIONAL SEARCH REPORT

| | International application No. |
|---|---|
| | **PCT/CN2020/121708** |

**A. CLASSIFICATION OF SUBJECT MATTER**

H04W 72/02(2009.01)i

According to International Patent Classification (IPC) or to both national classification and IPC

**B. FIELDS SEARCHED**

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 信道, 拥塞, 时隙, 频率, 资源, 测量, 感测, 窗, 忙碌比, 占用比, 连续, 激活, CBR, CR, DRX, RSSI, RSRP, SCI, channel, slot, frequency, resource, sensing detection, window, busy ratio, occupancy ratio, activation

**C. DOCUMENTS CONSIDERED TO BE RELEVANT**

| Category* | Citation of document, with indication, where appropriate, of the relevant passages | Relevant to claim No. |
|---|---|---|
| X | CN 111149397 A (LG ELECTRONICS INC.) 12 May 2020 (2020-05-12)<br>description paragraphs 148-190 | 1-50 |
| X | CN 109417777 A (LG ELECTRONICS INC.) 01 March 2019 (2019-03-01)<br>description paragraphs 184-199 | 1-50 |
| X | CN 111630933 A (LG ELECTRONICS INC.) 04 September 2020 (2020-09-04)<br>description paragraphs 152-176 | 1-50 |
| X | WO 2018145067 A1 (INTEL CORPORATION) 09 August 2018 (2018-08-09)<br>description paragraphs 151-158 | 1-50 |
| A | OPPO. "Remaining open issues on channel occupancy ratio"<br>*3GPP TSG-RAN WG1 Meeting #100e R1-2000496*, 06 March 2020 (2020-03-06),<br>entire document | 1-50 |
| A | CN 110620737 A (CENTRAL SOUTH UNIVERSITY) 27 December 2019 (2019-12-27)<br>entire document | 1-50 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 July 2021** | **21 July 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/121708**

| Patent document cited in search report | | | Publication date (day/month/year) | Patent family member(s) | | | Publication date (day/month/year) |
|---|---|---|---|---|---|---|---|
| CN | 111149397 | A | 12 May 2020 | WO | 2019066629 | A1 | 04 April 2019 |
| | | | | EP | 3672338 | A1 | 24 June 2020 |
| CN | 109417777 | A | 01 March 2019 | KR | 20190003774 | A | 09 January 2019 |
| | | | | RU | 2020115389 | A | 18 June 2020 |
| | | | | EP | 3468272 | A1 | 10 April 2019 |
| | | | | BR | 112019004649 | A2 | 18 June 2019 |
| | | | | EP | 3468268 | A1 | 10 April 2019 |
| | | | | CN | 109792640 | A | 21 May 2019 |
| | | | | KR | 20190007066 | A | 21 January 2019 |
| | | | | CL | 2019000583 | A1 | 10 May 2019 |
| | | | | AU | 2017248062 | A1 | 18 April 2019 |
| | | | | EP | 3512246 | A1 | 17 July 2019 |
| | | | | US | 2019191461 | A1 | 20 June 2019 |
| | | | | SG | 11201901833 Y | A | 29 April 2019 |
| | | | | US | 2019222981 | A1 | 18 July 2019 |
| | | | | US | 2019313374 | A1 | 10 October 2019 |
| | | | | US | 2019246249 | A1 | 08 August 2019 |
| | | | | JP | 2019530325 | A | 17 October 2019 |
| | | | | JP | 2019526995 | A | 19 September 2019 |
| | | | | US | 2020236518 | A1 | 23 July 2020 |
| | | | | US | 2020204968 | A1 | 25 June 2020 |
| | | | | KR | 20190000891 | A | 03 January 2019 |
| CN | 111630933 | A | 04 September 2020 | US | 2021068120 | A1 | 04 March 2021 |
| | | | | EP | 3711444 | A1 | 23 September 2020 |
| | | | | WO | 2019240548 | A1 | 19 December 2019 |
| WO | 2018145067 | A1 | 09 August 2018 | EP | 3577967 | A1 | 11 December 2019 |
| | | | | US | 2020029245 | A1 | 23 January 2020 |
| CN | 110620737 | A | 27 December 2019 | None | | | |

Form PCT/ISA/210 (patent family annex) (January 2015)